(19) Europäisches Patentamt
European Patent Office
Office européen des brevets

(11) EP 1 014 051 B1

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(51) Int Cl.$^7$: **G01G 19/414**, G07B 17/00

(21) Anmeldenummer: **99250420.9**

(22) Anmeldetag: **29.11.1999**

(54) **Verfahren und Anordnung zum Steuern einer dynamischen Waage**

Method and device for controlling a dynamic weighing apparatus

Procédé et dispositif pour contrôler une balance dynamique

(84) Benannte Vertragsstaaten:
**CH DE FR GB IT LI**

(30) Priorität: **18.12.1998 DE 19860295**

(43) Veröffentlichungstag der Anmeldung:
**28.06.2000 Patentblatt 2000/26**

(73) Patentinhaber: **Francotyp-Postalia AG & Co. KG**
**16547 Birkenwerder (DE)**

(72) Erfinder: **Thiel, Wolfgang, Dr.**
**13503 Berlin (DE)**

(56) Entgegenhaltungen:
**DE-C- 19 605 015** **US-A- 4 956 782**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 014 051 B1

Printed by Jouve, 75001 PARIS (FR)

## Beschreibung

Die Erfindung betrifft ein Verfahren zur Steuerung einer dynamischen Waage, gemäß des Oberbegriffs des Anspruchs 1 und eine entsprechende Anordnung dafür gemäß des Oberbegriffs des Anspruchs 8. Solche dynamischen Waagen wiegen ein Postgut während des Transportvorganges. Die Lösung bezweckt insbesondere eine schnelle Mischpostverarbeitung in einer Waage und Frankiereinrichtung. Unter Mischpost wird ein unsortierter Stapel an Poststücken verstanden. Wenn nachfolgend von Briefen gesprochen wird, so geschieht das stellvertretend auch für all die anderen möglichen Poststücke. Das erfindungsgemäße Verfahren ist für Anwender von Postverarbeitungssystemen sowohl mit einer dynamischen Waage und portoberechnenden Frankiermaschine als auch mit dynamischen Portorechnerwaagen und Frankiereinrichtungen geeignet.

Dynamische Briefwaagen sind bekannt. Beispielsweise vertreibt die Anmelderin eine dynamische Briefwaage als Bestandteil einer automatischen Poststraße Francopost 12.000. Dabei werden die Briefe als Stapel angelegt und zunächst automatisch vereinzelt. Die vereinzelten Briefe werden von der dynamischen Wiegeeinheit übernommen und ihr Gewicht wird bestimmt. Die Gewichtsbestimmung muß mit einer Genauigkeit erfolgen, welche die Zuordnung der Briefe zur richtigen Portoklasse ermöglicht. Das Porto wird an die angeschlossene Frankiereinheit automatisch übertragen, verrechnet und auf den Brief gedruckt. Beim Auftrag des Briefes auf den Wiegeteller und dessen Transport werden mechanische Schwingungen auf den Gewichtssensor übertragen, deren Amplitude näherungsweise proportional dem absoluten Briefgewicht sind. Diese Störschwingungen begrenzen die Genauigkeit des Meßergebnisses. Im Allgemeinen wird bei dynamischen Briefwaagen eine Meßgenauigkeit von 1g angegeben bis zu einem Briefgewicht von 1000g. Briefe, die schwerer sind, können mit dieser Einrichtung nicht mit der Genauigkeit gewogen werden, die eine automatische Portoeinstellung der Frankiereinrichtung ermöglichen würde. Diese Briefe müssen dann separat mit einer geeigneten statischen Waage gewogen werden. Das entsprechende Porto muß dann in die Frankiereinheit manuell eingegeben werden. Der automatische Ablauf ist damit unterbrochen. Besonders nachteilig ist der Umstand, daß der Postversender nicht vorhersehen kann, ob der spezielle Brief, den er gemeinsam mit den anderen als Stapel anlegt, diese Gewichtsgrenzen überschreiten wird oder nicht.

In der US 4,778,018 wird eine dynamische Briefwaage beschrieben, bei welcher der Wiegeteller federnd gegenüber dem Transportmechanismus aufgehängt ist. Damit sollen die Übertragung von Schwingungen vom Transportmechanismus auf die Wiegezelle gedämpft werden. Bei großen Gewichten reicht diese Dämpfung jedoch nicht aus, um eine ausreichende Meßgenauigkeit zu sichern. Hinzu kommt, daß eine derartige federnde Aufhängung ein Einschwingen des Wiegetellers hervorruft, welche die Meßzeit verlängert und damit den Briefdurchsatz verringert.

In US 5,014,797 wird ein nicht modulares Gerät zur automatischen Postbearbeitung beschrieben, in welchem die dynamische Wiegefunktion integriert ist. Damit soll eine Verkürzung der Transportwege und ein insgesamt höherer Briefdurchlauf pro Zeiteinheit erreicht werden. Auch bei dieser Lösung ist das maximale Gewicht bei vorgegebener Meßgenauigkeit und Verarbeitungsgeschwindigkeit begrenzt. Ein nach dieser Lösung gebautes Produkt erreicht einen Durchsatz von ca. 5000 Poststücken pro Stunde bei einem maximalen Gewicht von 500g. Für Poststücke mit größerem Gewicht bietet der Hersteller eine zusätzliche statische Waage an, die beigestellt wird. Auch hier ist eine automatische Verarbeitung von Poststücken höheren Gewichtes nicht möglich.

Aus der US 4,956,782 und der GB 22 35 656 A ist ein halbdynamisches Wiegen bekannt. Die stromaufwärts angeordnete Benutzerstation kann eine Waage sein und die stromabwärts angeordnete Benutzerstation ist eine Frankiermaschine. Für die zur Gewichtsbestimmung erforderliche Meßzeit muß ein kontinuierlich bewegtes Poststück vollständig von der Waage aufgenommen werden. Bei Mischpost ist die Wahrscheinlichkeit größer, daß die Waage ein falsches Meßergebnis ermitteln könnte. In Abhängigkeit von den Abmaßen des Briefes wird die Meßzeit erhöht. Dazu sind eine komplizierte Steuerung, welche die Abmaße der Briefe im Voraus auswertet, und steuerbare Motoren erforderlich. Alternativ könnte zwar die Wiegestrecke erhöht und ein Aussteuerfach angeordnet werden. Das würde jedoch die Länge des gesamten Postverarbeitungssystems erhöhen, was ohne eine größere Umrüstung jedoch nicht möglich ist.

Gemäß der EP 514 107 B1 wird von einer Steuereinrichtung bei großen und schwer zu wiegenden Poststükken der Transport solange unterbrochen, bis die Messung stabil ist. In der Waage ist nahe dem stromabwärts gerichteten Transportbandende ein Detektor angeordnet, welchen nur Briefe durchlaufen, deren Gewicht bis zu diesem Zeitpunkt bestimmt worden ist. Bei kurzer Wiegestrecke und ungleich verteilter Masse im Brief oder hoher Transportgeschwindigkeit massereicher Briefe treten Meßfehler auf. Außerdem kann bei einem Stop der Brief durch seine Massenträgheit vom Wiegeteller rutschen. Deshalb sind die Abmaße des Wiegetellers etwas größer ausgelegt bzw. die Transportgeschwindigkeit kleiner festgelegt. Der Durchsatz bei Mischpost ist entsprechend verringert.

Aus der DE OS 37 31 494 (US 4,753,432) ist es bekannt, zum Wiegen eine Ruhezeit zu schaffen, wobei der Betrieb des Frankiersystems und des Transportsystems unterbrochen werden, weil letztere sonst eine zu hohe Vibration liefern würden. Die Transportzeit vom Waagemodul zur Frankiermaschine ist zwar klein gewählt. Aber einerseits kann die Geschwindigkeit nicht beliebig vergrößert werden, um die Staugefahr nicht zu vergrößern. Andererseits ist die erzielbare Taktleistung durch in den Ablauf eingefügte Pausen begrenzt. Die Geschwindigkeit des Wiegens ist durch die Geschwindigkeit der Gewichtsbestimmung begrenzt. Letztere bereitet bei schweren Poststücken einen größeren Aufwand, wenn die Messung genau sein muß.

Unter dem Ziel den Durchsatz an Poststücken pro Stunde zu erhöhen, ist es die Aufgabe der Erfindung, eine automatische Verarbeitung von Poststücken auch höheren Gewichtes zu erreichen, wobei manuelle Eingriffe während der Postverarbeitung erübrigt werden sollen. Alternative Wiegemittel sollen eingespart werden. In einer speziellen kundenspezifischen Ausführungsform soll ein möglichst hoher Anteil der Ausgangspost des Postversenders im dynamischen Modus gewogen werden.

Die Aufgabe wird mit den Merkmalen des Verfahrens nach Anspruch 1 und mit den Merkmalen einer Anordnung nach Anspruch 8 gelöst.

Die Waage ist aus den Hauptkomponenten Transporteinrichtung, Wiegeteller, Wiegezelle sowie elektronische Steuerungs- und Auswerteeinheit zusammengesetzt. Der Wiegeteller hat vorzugsweise eine rechteckige Form, wobei die quer zur Transportrichtung orientierte Abmessung mindestens dem maximalen Briefformat zuzüglich einer Einlauftoleranz entsprechen muß. Die Abmessung der Wiegeplattform in Transportrichtung muß dem maximalen Längsformat des Postgutes entsprechen zuzüglich einer Strecke, die während des Wiegevorganges vom Wiegegut zurückgelegt wird. Für die Realisierung der Erfindung ist es dabei ohne Belang, ob die Poststücke senkrecht oder waagerecht transportiert werden. Es kann ein an sich bekanntes Wiegeverfahren in der Wiegezelle zur Anwendung kommen.

Die erfindungsgemäße Waage kann beispielsweise in drei Betriebsmodi betrieben werden, die jeweils der unterschiedlichen Zusammensetzung der zu verarbeitenden Briefstapel angepaßt sind:

1. Der Stapel enthält Briefe, welche alle das gleiche Gewicht aufweisen, beispielsweise eine Werbesendung mit gleichem Inhalt. Eine Wiegung der Einzelbriefe entfällt damit. Im ersten Betriebsmodus gibt die Steuereinheit an den Antrieb des Transportmechanismus der Waage einen Steuerbefehl für die maximale Transportgeschwindigkeit aus.

2. Der Stapel enthält überwiegend Briefe gleichen Gewichtes, zum Beispiel eine Werbesendung mit überwiegend gleichartigen Anlagen bei der aber einige wenige Adressaten umfangreichere Anlagen gesendet bekommen. In diesem Fall ist es günstig, nur einen Schwellwert zu überwachen, unterhalb dessen sich die große Mehrzahl an Briefen mit einem bekannten Gewicht befindet (oberer Schwellwert). Der umgekehrte Fall der Überwachung eines unteren Schwellwert, oberhalb dessen sich die Mehrzahl der Briefgewichte befindet, ist ebenfalls möglich. Diese Schwellwerte sind vom Benutzer über die Ein- und Ausgabemittel einstellbar. Für häufig vorkommende Versandarten mit feststehendem Schwellwert, z.B. Infopost, genügt die Auswahl der Versandart, wodurch automatisch der zugehörige gespeicherte Schwellwert aktiviert wird (z.B.: Infopost-Standard = 20g). Briefe, die jenseits des Schwellwertes liegen, können beispielsweise aus dem Briefstrom ausgeschieden werden. Generell kann bei Anwendung der Schwellwertüberwachung die Meßgenauigkeit und/oder die Transportgeschwindigkeit an die Höhe des jeweiligen Schwellwertes angepaßt werden. Beispielsweise erlaubt ein niedriger oberer Schwellwert (z.B. 100g) eine relativ hohe Transportgeschwindigkeit, denn Gewichte unterhalb dieses Schwellwertes bedürfen nur einer sehr geringen Einschwingzeit der Wiegeplattform und höhere Gewichte müssen nicht genau gemessen werden, da der Umstand bereits ausreicht, daß sie höher als der Schwellwert sind.

3. Der Stapel enthält Briefe unterschiedlichen Gewichtes (Mischpost). Jeder Brief ist hinsichtlich seines Gewichtes mit hinreichender Genauigkeit zu bestimmen und auf der Basis dieses Meßwertes das Porto zu berechnen. Beispielsweise können eine hinreichende Genauigkeit und optimale Transportgeschwindigkeit erzielt werden, wenn eine obere Meßgrenze eingestellt wird, unterhalb derer die einzelnen Briefgewichte liegen.

Mit dem Begriff "hinreichende Genauigkeit" ist der Zusammenhang zwischen absoluter Meßgenauigkeit (kleine Toleranz), Obergrenze des Meßbereiches und Meßzeit angesprochen. Die Meßzeit ist begrenzt, durch den Weg, den der Brief bei vorgegebener Transportgeschwindigkeit auf dem Wiegeteller zurücklegt. Sie ist nur dadurch zu vergrößern, daß der Wiegeteller verlängert wird, oder die Transportgeschwindigkeit verringert wird. Bei einer vorgegebenen Waage kommt nur noch die letzte der beiden Möglichkeiten in Betracht. Eine hohe Meßgenauigkeit geht zu Lasten der anderen beiden Parameter Obergrenzen Meßbereich und Transportgeschwindigkeit. Sie sollte deshalb nur so hoch gewählt werden, wie es das Kundeninteresse erfordert. Letzteres erfordert, daß keine Briefe auf Grund eines zu gering bestimmten Gewichtes eine aufwendige Nachzahlung erfordern, andererseits auch nicht aufgrund zu hoch gemessenen Gewichtes ein zu hohes Porto bezahlt wird. Die Quantisierung dieser Anforderungen hängt von der Struktur der Portogebühren ab. Wenn beispielsweise die Portogebühren eines Postversandunternehmens sich in Stufen von jeweils 20g ändern, so ist eine über den gesamten Meßbereich relativ hohe Meßgenauigkeit erforderlich. Versendet der Kunde unter diesen Bedingungen überwiegend "normale" Briefe von eher geringem Gewicht, so ist eine Einstellung der dynamischen Waage möglich, die eine hohe Meßgenauigkeit von z.B. 0,5g bei mittlerer Verarbeitungsgeschwindigkeit kombiniert mit einer niedrigen oberen Meßbereichsgrenze von z.B. 400g für den dynamischen Betrieb. In einem anderen Fall, kann die Portostruktur hinsichtlich des Gewichtes nur wenig differenziert sein. Beispielsweise gilt bei der deutschen Post AG (DPAG) für den Versand von "Infopost-Groß" und "Infopost-Maxi" die gleiche obere Gewichtsgrenze von 1000g unterhalb derer das Porto vom Gewicht unabhängig ist. In diesem Falle würde eine optimale Einstellung der dynamischen Waage so erfolgen, daß nur dieser Grenzwert überwacht würde (s. Betriebsmodus 2). Da hierzu eine absolute Genauigkeit von 10g ausreicht, kann eine noch relativ große Transportgeschwindigkeit für während des Wiegens ermöglicht werden.

Das erfindungsgemäße Verfahren ermöglicht es, entsprechend den jeweiligen Anforderungen an die Bearbeitung eines Mischpoststapels eines optimale Einstellung der dynamischen Waage vorzunehmen, wobei das Einstellen wahlweise anhand ausgewählter Versandparameter und/oder Betriebsparametern erfolgt. Es ist vorgesehen, daß das Einstellen der dynamischen Waage mittels dreier Wiegeparameter (Meßbereich, Genauigkeit, Geschwindigkeit) erfolgt, welche in ihrer Größe voneinander abhängen, so daß die Veränderung eines Parameters zur Veränderung mindestens eines der anderen Parameter führt, daß die Veränderung von einer Steuerung der Waage überwacht und über eine Anzeigeeinheit angezeigt wird.

Vorteilhafte Weiterbildungen der Erfindung sind in den abhängigen Ansprüchen gekennzeichnet bzw. werden nachstehend zusammen mit der Beschreibung der bevorzugten Ausführung der Erfindung anhand der Figuren näher dargestellt. Es zeigen:

Figur 1, Perspektivische Ansicht einer dynamischen Waage von vorn rechts,

Figur 2, Blockschaltbild der Steuerung einer dynamischen Waage und der Steuerung einer Frankiereinrichtung,

Figur 3, Benutzerschnittstelle einer Frankiereinrichtung,

Figur 4, Schirmbild zum Einstellen der Versandparameter,

Figur 5, Schirmbild zum Einstellen der Waage,

Figur 6, Schirmbild Nicht-Wiege-Modus,

Figur 7, Schirmbild zum Einstellen der Waage auf Überwachung des unteren Schwellwertes,

Figur 8, Schirmbild zum Einstellen der Waage auf Überwachung des oberen Schwellwertes,

Figur 9, Schirmbild zum Einstellen der Wiegeparameter,

Figur 10, Darstellung der Taktleistung der Waage bei Mischpostverarbeitung.

In der Figur 1 wird eine perspektivische Ansicht einer dynamischen Waage 10 dargestellt, welche für den Transport von auf der Kante stehenden Briefen bzw. Poststücken A ausgebildet ist. Letztere liegen an einem Wiegeteller 6 an, der in einer hinteren Führungswand 1 der Waage in einer Ausnehmung 11 angeordnet ist. Beidseitig der Ausnehmung 11 für den Wiegeteller 6 sind in der hinteren Führungswand 1 Sensoren S1 und S2 angeordnet. Dafür kommen vorzugsweise Lichtreflexschranken in Frage, welche die Hinter- bzw. Vorderkante eines Briefes A detektieren, wenn er auf den Wiegeteller 6 transportiert wird. Der Sensor S1 ist stromaufwärts nahe dem Beginn des Weges des Poststückes auf dem Wiegeteller (in Transportrichtung gesehen) angeordnet.

In Höhe der unteren Führungswand 3 der Waage liegt eine Transporteinrichtung 4 mit einem Transportriemen. Die hintere Führungswand 1 ist leicht, vorzugsweise 18° zur Senkrechte, nach hinten geneigt. Das entspricht einem bereits ermittelten Optimierungswinkel für eine automatische Briefzuführung und eine Frankiermaschine (DE 196 05 014 C1 und DE 196 05 015 C1). Die untere Führungswand 3 ist orthogonal zur hinteren und demzufolge auch zur vorderen Abdeckplatte 2 angeordnet. Damit wird eine definierte Brieflage und eine harmonische Anpassung an die vor- und nachgeordneten Geräte erreicht. Die vordere Abdeckplatte 2 besteht beispielsweise aus Plexiglas. Alle genannten Baugruppen bzw. Teile sind über entsprechende Zwischenstücke auf einem Chassis 5 befestigt. Weitere Einzelheiten zum konstruktiven Aufbau der Waage sind dem DE 19833767 C2 zu entnehmen.

Anhand der Figur 2 wird das Blockschaltbild der Steuerung einer dynamischen Waage und das Blockschaltbild der Steuerung einer Frankiereinrichtung erläutert. Die Steuerung 20 einer dynamischen Waage 10, weist einen Mikroprozessor 21 auf, welcher mit einem Programmspeicher 22, mit einem nichtflüchtigen Speicher 23 sowie mit Schnittstellen zur Ein- und Ausgabe 24, 25 verbunden ist. Alternativ ist ein Mikrocontroller mit intergriertem Speicher einsetzbar. Der Mikroprozessor 21 ist mit einem Motor 49 der Transporteinrichtung 4 der Waage über einen Treiber 26, mit einem Encoder 50 und mit Sensoren S1, S2 sowie mit einer Wiegezelle 7 betriebsmäßig verbunden, um Sensorsignale, Encodersignale und Gewichtsdaten zu empfangen und um Steuerbefehle an die Transporteinrichtung 4 zu senden. Die Transporteinrichtung 4 enthält vorzugsweise einen Gleichstrommotor 49, welcher mit Gleichstomimpulsen gespeist wird, wobei sich aufgrund des Verhältnises der Impulslänge zur Impulspause eine bestimmte Drehzahl einstellt. Im Betriebsmodus für den dynamischen Betrieb der Waage führt die Transporteinrichtung 4 eine Vorwärtsbewegung des betreffenden Briefes innerhalb der Waage stromabwärts mit einer bestimmten Geschwindigkeit aus, wobei diese Geschwindigkeit die Transportgeschwindigkeit in der weiteren Verarbeitungsstation nicht übersteigt.
In einer weiteren Ausführungsform ist vorgesehen, daß die Transporteinrichtung 4 der Waage einen Motor 49 mit steuerbarer Drehzahl umfaßt, wobei durch die Steuereinheit 20 entsprechende Steuerbefehle erzeugt werden, durch welche im zweiten Betriebsmodus die Transportgeschwindigkeit in der Waage verändert werden kann.
In einer anderen Ausführungsform ist vorgesehen, daß die Transporteinrichtung der Waage einen umschaltbaren Antrieb und daß die Steuerung 20 den Treiber 26 umfaßt, der zwischen Antrieb und der Steuerung geschaltet ist, womit die Transportrichtung der Waage umgekehrt werden kann, um in einem weiteren Betriebsmodus den Brief auf die Mitte des Wiegetellers zurückzutransportieren und um dort eine Nachwiegung auszuführen. Der Treiber 26 kann auch als Relais ausgebildet sein. Die von der Steuereinheit 20 ausgehenden Steuersignale steuern das Relais an, welches die Spannung für die Antriebsmotoren der Transporteinrichtung schaltet. Der Motor 49 ist über ein geeignetes Getriebe 44 mit der Antriebsrolle 485 verbunden. Das Getriebe 44 kann sowohl ein Zahnradgetriebe als auch ein Riemengetriebe sein.
In einer alternativen Ausführung, umfaßt die Transporteinrichtung 4 der Waage ein umschaltbares Getriebe mit Motor, wobei durch Umschaltung des Getriebes bei an den Motor angelegter Betriebsspannung im zweiten Betriebsmodus die Transportrichtung der Waage umgekehrt werden kann. Es kann außerdem durch entsprechend Ansteuerung in den Leerlauf oder eine andere Übersetzung geschaltet werden.

Als weitere Alternative ist ein permanent angetriebener Transportmechanismus zu nennen, bei dem das Steuersignal genutzt wird, um den Eingriff anderer Transportmittel, z.B. eines Rollenpaares, auf die Briefoberfläche zu unterbinden, dadurch daß das Rollenpaar durch einen weiteren Antriebsmotor von der Briefoberfläche abgehoben wird.

Eine besonders wirksame Umsetzung der Erfindung wird ermöglicht, wenn die Transportgeschwindigkeit durch die Steuereinheit in mehreren Stufen einstellbar ist. Dazu besonders geeignet sind Antriebe mit Schrittmotoren. Die Steuereinheit ist vorzugsweise als mikroprozessorgesteuertes programmierbares Modul 20 mit entsprechenden Schnittstellen 24, 25, welche Ein- und Ausgangskanäle aufweisen, ausgeführt.

Auch bekannte Waagen für waagerecht zu transportierende Briefe oder mit andersartiger Transporteinrichtung können für entsprechende Frankiereinrichtungen natürlich ebensogut in modifizierter Form eingesetzt werden.

Die Wiegezelle 7 besitzt beispielsweise einen Dehnungsmeßstreifen mit angeschlossener Auswerteschaltung, welche digitale Gewichtsdaten an den Mikroprozessor 21 abgibt. Es ist unerheblich, welches spezielles Wiegeverfahren in der Wiegezelle 7 zur Anwendung kommt. Beispielsweise kann auch das vom Anmelder entwickelte und in DE 30 23 565 beschriebene Verfahren der schwingenden Seite angewandt werden.
Der Sensor S1 stromaufwärts dient als Einlaufsensor und der Sensor S2 stromabwärts dient als Auslaufsensor. Zum Sensor gehört eine an sich bekannte Auswerteschaltung, welche digitale Signale an den Mikroprozessor 21 abgibt. Ein Sensor kann beispielsweise als Lichtschranke ausgebildet sein. Die Wiegezelle ist vorzugsweise vom Typ HBM PW 2G der Firma Hottinger Baldwin Meßtechnik. Bei diesem Typ ist eine Auswerteschaltung bereits in die Wiegezelle integriert. Die Auswerteschaltung steht in Verbindung mit dem elektrischen Ausgang der Wiegezelle 7 und hat u.a. die Aufgabe der Kalibrierung und Glättung jedes Meßwertes.

Der nichtflüchtige Speicher 23 ist beispielsweise ein $E^2$PROM mit maschinenspezifischen Parametern und Daten zur Steuerung der Waage, welche aus Erfahrungswerten des Herstellers gewonnen wurden und in Tabellenform gespeichert werden. Die Steuereinheit 20 verarbeitet Eingangssignale von Sensoren S1 und S2 und die Daten aus dem nichtflüchtigen Speicher 23 und erzeugt Ausgangssignale für den Antriebsmotor 49 der Transporteinrichtung in Abhängigkeit von der Briefposition und überwacht das Gewicht bzw. führt eine Gewichtsbestimmung durch.
Der Programmspeicher 22 der Waage weist ein Programm zur Auswertung der Meßwerte auf, wobei der Mikroprozessor pP der Steuerung 20 programmiert ist, nur einen plausiblen Meßwert an die Frankiereinrichtung 80 zu übermitteln. Nach Aufbereitung des Meßwertes wird diesem gemäß einer Portotabelle eine Gewichtsklasse und schließlich unter Einbeziehung weiterer postalischer Informationen, wie Versandart, Versandziel usw. ein Portowert zugeordnet. Diese letzten Schritte können vorzugsweise in der Steuereinheit 81 einer Frankiereinrichtung bzw. -maschine 80 ausgeführt werden, an welche dann nur der Wiegemeßwert übertragen wird. Die Steuerung 20 der dynamischen Waage ist zu diesem Zweck über die serielle Schnittstelle 25, über Kabel 89 und über die serielle Schnittstelle 84 mit der Steuerung 81 der Frankiereinrichtung 80 verbunden. Zur Eingabe und Anzeige der weiteren postalischen Informationen und von zusätzlichen Parametern in die Waage wird vorzugsweise eine externe Benutzerschnittstelle benutzt, zum Beispiel die der Frankiereinrichtung 80. Dem Bediener steht eine Tastatur 86 zur Verfügung, welche die erfindungsgemäße Veränderung von Betriebsparametern und Daten erlaubt, welche vorzugsweise im nichtflüchtigen Speicher 23 der Waage gespeichert sind. Vorzugsweise wird zur Anzeige der Waageparametereinstellung das Display 88 der Frankiereinrichtung 80 mit genutzt. Der Frankieraufdruck wird mittels der Druckstation 87 ausgeführt, die vorteilhaft einen digital arbeitenden Druckkopf aufweist, beispielsweise einen Ink Jet Druckkopf. Dadurch wird ermöglicht, den bei Mischpost jeweils neu errechneten Frankierwert auch ohne Verzögerung drucken zu können.

Die Figur 3 zeigt ein Beispiel für ein international einsetzbares Userinterface IUI für eine Frankiermaschine 80 mit der Anzeigeeinheit 88 und mit der Eingabeeinheit 86. Die Anzeigeeinheit 88 ist ein großflächiges Display, unterhalb dessen die Eingabeeinheit 86 mit einer Anzahl an Eingabefeldern I-1, I-2, I-3 und I-4 angeordnet ist. Eine nicht näher dargestellte Steuerung 81 umfaßt einen Mikroprozessor und einen Programmspeicher mit einem Programm für die Generierung von Schirmbildern. Nach dem Einschalten wird vom Mikroprozessor ein erstes Schirmbild generiert, welches ein Grundmenübild Frankieren zeigt. In jedem Schirmbild können mehrere (übereinanderliegende) Anzeigefelder dargestellt werden, deren Grenzen variabel sind. Ein erstes (oberes) Anzeigefeld 887 ist für Warnungen, Bedienhinweise und Eingabeaufforderungen vorgesehen bzw. enthält mindestens eine Statuszeile mit Anzeige der Eingabe in einem Editierfeld. Letzteres bietet die Möglichkeit z.B. Werte bis zu 10 Zeichen einzugeben. Ein zweites (mittleres) Anzeigefeld ist für Eingabeoptionen und Einstellparameterhinweise vorgesehen. Ein drittes (unteres) Anzeigefeld dient als Funktionsbezeichnungsfeld für eine Anzahl an darunterliegend angeordneten Softkeys. Beim dargestellten Schirmbild sind einzelne Teilbilder 881 bis 885 des zweiten und dritten Anzeigefeldes bezüglich ihrer Funktionen miteinander kombiniert. Es werden angezeigt: Die Kostenstellen-Abrechnungsnummer im Anzeigefeld 881, die Werbeklischeenummer im Anzeigefeld 882, die Wahldruck-arten im Anzeigefeld 883, das Datum im Anzeigefeld 884 und der Portowert im Anzeigefeld 885. Das Teilbild 886 ist für das Carrierlogo bzw. das jeden Postbeförderer kennzeichnende Postwertzeichenbild vorgesehen. Die Menüstrukturen sind nicht starr an Schablonen gekoppelt. Neben der Dreifelderunterteilung in Screens sind sowohl Slidebilder, als auch Listenbilder anzeigbar.

Die Eingabeeinheit weist vier Eingabefelder auf, welche in Verbindung mit den dargestellten Schirmbildern eine unkomplizierte Eingabe durch den Benutzer ermöglichen. Die Betätigungsmittel der Eingabefelder sind vorzugsweise Tasten. Es können einerseits Grundmenüs über Grundmenütasten (Hardkeys) eines ersten Eingabefeldes I-1 direkt angewählt werden, wobei vom Mikroprozessor für jedes Grundmenü ein spezielles Schirmbild generiert wird, daß von der Anzeigeeinheit 88 angezeigt wird. Mit einer Home-Taste wird der Eintritt in das Grundmenü Frankieren und die Anzeige des Grundmenübildes ausgelöst. Der Benutzer kann mit diesen Grundmenütasten aus beliebigen Position des Menübaumes den Wechsel zu einem anderen Menüpfad vollziehen. Diese weiteren Eintrittspunkte gelten beispielsweise für die Kostenstellenverwaltung (ACCT), für die Meterfunktionen (SETUP), für die Versandparametereinstellung zwecks Portoberechnung (SCALE), für die Fernwertvorgabe (TELESET) und weitere Funktionen. Die Hardkeys sind so beschriftet, daß die Bedienoperation für den Bediener sofort verständlich ist. Ausgehend von dem Grundmenübild Frankieren, welches ein zu druckendes Frankierbild näherungsweise wiederspiegelt, können andererseits in bekannter Weise mittels Softkeys eines zweiten Eingabefeldes I-2 Eingaben getätigt werden, um das Frankierbild oder um mindestens einen der damit angezeigten Parameter Portowert, Datum, Wahldrucke, Werbeklischee bzw. Kostenstellen-Nummer zu verändern.

Die Funktion der Softkeys ist abhängig von der Funktionsweise die den Menü- oder Listenbildern zugrunde liegt. Außerdem sind weiterhin in generierten Schirmbildern anzeigbare Menüs oder Listenbilder über Bedienelemente eines dritten Eingabefeldes I-3 alternativ anwählbar. Es ist vorgesehen, daß die Bedienelemente Hardkeys sind. Durch Betätigen einer Back-Taste wird ein Schirmbild wiederhergestellt, welches vorausgehend schon einmal eingestellt war. Zusätzlich werden über weitere zwei Hardkeys ↑ bzw. ↓ (Pagetasten) des dritten Eingabefeldes I-3 Schirmbilder angewählt, wobei die Auswahl der Schirmbilder durch ein sogenanntes seitenweises Blättern erfolgt. In ansich bekannter Weise werden bei Editierfunktionen über Hardkeys des vierten Eingabefeldes I-4 Eingaben getätigt.

Über die Grundmenütaste SCALE des ersten Eingabefeldes I-1 wird das Grundmenübild 300 direkt angewählt, welches anhand der Figur 4 näher erläutert wird. Die Figur 4 zeigt ein Schirmbild zum Einstellen der Versandparameter. Letztere sind zusätzlich zum ermittelten Gewichtswert zur Portoberechnung erforderlich. Im dritten Anzeigefeld erfolgt eine Aufforderung: BITTE VERSANDPARAMETER WÄHLEN ! Im zweiten Anzeigefeldes wird zunächst kein Versandparameter und solange nicht angezeigt, bis die Eingabe getätigt wurde. Zur Eingabe wird eines der Softkeys gedrückt. Mit dem Softkey SK4 können WEITERE Schirmbilder mit einer Anzahl an Versandparametern aufgerufen werden. Mit dem Softkey SK1 wird beispielsweise INFOPOST STANDARD eingestellt. Im linken Teil des zweiten Anzeigefeldes wird der zuerst eingegebene Versandparameter, d.h. INFOPOST STANDARD angezeigt. Nun ändert sich beispielsweise die Anzeige im dritten Anzeigefeld, da nur bestimmte Versandparameterkombinationen zulässig sind. Im dritten Anzeigefeld werden Funktionen der Softkeys angezeigt, welche nach Auswahl des ersten Versandparameters zulässig sind. Bei Betätigung des Softkeys SK5 wird die Funktion WAAGE EINSTELLEN aufgerufen und das Schirmbild 350 angezeigt.

Die Figur 5 zeigt ein solches Schirmbild 350 zum Einstellen der Waage. Wenn die Softkey SK4 des zweiten Eingabefeldes 1-2 Eingaben betätigt wurde ist beispielsweise der - gezeigte - Modus WIEGEN eingestellt. Beim Betätigen der Softkey SK1 wird ein NICHT WIEGE-MODUS eingestellt. Die Figur 6 zeigt ein entsprechendes Schirmbild 351 für den Nicht-Wiege-Modus. Die Steuerung 81 teilt die Einstellung dieses Modus über Kabel 89 und die Schnittstellen 84 und 25 dem Mikroprozessor 21 der Steuerung 20 der dynamischen Waage mit. Die Transportgeschwindigkeit kann auf ihren maximalen Wert gestellt werden. Zusätzlich kann die Taktleistung des Postverarbeitungssystems durch Verringerung des Abstandes zwischen den einzel zugeführten Poststücken erhöht werden. Sie kann auf ca. 100 % der Taktleistung einer angeschlossenen Frankiermaschine, welche den eingestellten Portowert und Wahldruck druckt angehoben werden. Es ist vorgesehen, daß stromaufwärts zur Waage eine - nicht gezeigte - Vereinzelungsvorrichtung angeordnet ist, deren Steuereinheit mit der Steuereinheit 20 der Waage verbunden ist, wobei deren Steuereinheit umschaltbar zur schnelleren Vereinzelung und Zuführung der Poststücke A zur dynamischen Waage ausgebildet ist, wodurch durch Verringerung des Abstandes zwischen den einzeln zugeführten Poststücken die Taktleistung des die Waage und die Verarbeitungsstation 80 einschließenden Postverarbeitungssystems erhöht wird.
Wenn die Anzeige keinen Wert für den eingestellten Portowert ausweist, dann muß im Grundmenü Frankieren der Portowert ebenfalls erst noch eingestellten werden.
Nach dem Betätigen der HOME-Taste erscheint das Grundmenü Frankieren, in welchen die Möglichkeit besteht einen Portowert direkt über die Zifferntasten einzugeben. Anschließend wird die BACK-Taste betätigt, um wieder in das - in der Figur 6 gezeigte - vorausgehende Schirmbild 351 für den Nicht-Wiege-Modus zurückzuspringen.
Das Schirmbild Nicht-Wiege-Modus bietet die Möglichkeit für eine bestimmte Anzahl an Poststücken den entsprechenden Wahldruck zu drucken. Zunächst wird über die Zifferntasten die Anzahl eingegeben und mit der Enter-Taste bestätigt. Der Versandparameter wurde bereits vorher ausgewählt, beispielsweise INFOPOST. Für die Versendung von Infopost/Infobrief gelten Mindesteinlieferungsmengen. Bei Unterschreitung dieser Mindesteinlieferungsmenge wird eine Aufzahlung erforderlich. Die Frankiermaschine ermittelt aus der Differenz zur Mindesteinlieferungsmenge den erforderlichen Aufzahlungsbetrag und zeigt diesen an. Bei Betätigung der dritten Softkey SK3 wird der Aufzahlungsbetrag auf einen separaten Frankierstreifen als Frankierwert gedruckt.

Aus dem in der Figur 5 gezeigten Schirmbild zum Einstellen der Waage kann durch Betätigen der Softkey SK2 in einen zweiten Modus umgeschaltet werden. Bei Postverarbeitungssystemen kann es versehendlich vorkommen, daß ein leerer Briefumschlag frankiert wird. Bei Postverarbeitungssystemen kann natürlich auch der Fall eintreten, daß ein Briefkuvert eine bestimmte Beilage versehentlich nicht enthält, wodurch sich das Briefgewicht verringert. Insofern wird eine Funktion zur Überwachung des unteren Briefgewichtes erwünscht. Die Figur 7 zeigt ein Schirmbild 352 zum Einstellen der Waage auf Überwachung des unteren Schwellwertes, welcher automatisch gemäß einer Gerührentabelle auf beispielsweise 20 g eingestellt wird. Im dritten Anzeigefenster des Schirmbildes 352 werden die Optionen für eine Einstellung einer weiteren Funktion (STOP, ZÄHLEN oder AUSSTEUERN) dargestellt, welche über die Softkey SK2 bis SK4 aufgerufen wird. Bei der Funktion STOP stoppt die Waage den Weitertransport des Briefes zwecks seiner Entnahme. Bei der Funktion ZÄHLEN speichert die Waage den Zählwert vor dem Weitertransport des Briefes zwecks seiner späteren zielgerichteten Entnahme aus dem Poststapel. Bei der Funktion AUSSTEUERN wird ein Aussteuerfach angesteuert, welches den zu leichten Brief aus dem Poststrom aussteuert.

Aus dem in der Figur 5 gezeigten Schirmbild zum Einstellen der Waage kann durch Betätigen der Softkey SK3 in einen dritten Modus umgeschaltet werden. Die Figur 8 zeigt ein entsprechendes Schirmbild 353 zum Einstellen der Waage auf Überwachung des oberen Schwellwertes. Die Überwachung hat auch hier wieder den Zweck einige wenige Briefe aussondern zu können, um eine Behebung des Mangels vornehmen zu können oder um sofort ein Nachwiegen zu veranlassen. Das Betätigen der Softkey SK3 erlaubt die Funktion ZÄHLEN in Verbindung mit dem Weitertransport des Briefes bei maximaler Geschwindigkeit. Nach Verarbeitung des Poststapels werden die Anzahl und Position (Zählwerte) für Poststücke ausgegeben, welche den oberen Schwellwert (zum Beispiel 1000g) überschreiten. Solche Poststücke lassen sich dann im Nachhinein aus dem Stapel aussondern, um ggf. eine Gewichtsreduzierung, beispielsweise durch Entfernen von Beilagen zu veranlassen. Bei Vorhandensein der konstruktiven Voraussetzungen sind (ähnlich wie bereits beim Überwachen des unteren Schwellwertes beschrieben) auch die Reaktionen ANHALTEN oder AUSSTEUERN prinzipiell möglich.

Aus dem in der Figur 5 gezeigten Schirmbild zum Einstellen der Waage kann durch Betätigen der Softkey SK4 in einen vierten Modus umgeschaltet werden. Die Figur 9 zeigt ein Schirmbild 354 zum Einstellen der drei Wiegeparameter Meßbereich, Meßtoleranz und Geschwindigkeit. Die Geschwindigkeit des Postguttransportes in der Waage kann mittels des Softkey SK5 kleiner und des Softkey SK4 maximal gleich der Transportgeschwindigkeit der Frankiermaschine eingestellt werden. Beispielsweise soll die Transportgeschwindigkeit gesenkt werden, da bei gleicher Meßtoleranz (Genauigkeit) die Meßzeit für große und schwere Poststücke verlängert werden muß. Falls eine voreingestellte Meßtoleranz nun verändert werden soll, erfolgt die Eingabe des Wiegeparameters MESSTOLERANZ durch Betätigen der Zifferntasten und des Softkeys SK3. Im Ergebnis wird dann über das Schirmbild automatisch der Grenzwert für den sich ergebenden Meßbereich angezeigt. Der Meßbereich kann mittels der Softkeys SK1 erhöht bzw. mittels SK2 verkleinert werden, was sich auf die eingestellte Transportgeschwindigkeit verändernd auswirkt. Das erfindungsgemäße Verfahren schafft somit weiterhin die Möglichkeit auch Poststücke jenseits der Grenze eines Meßbereiches zu wiegen.

In erster Näherung besteht ein linearer Zusammenhang zwischen Meßgenauigkeit Y, oberer Meßbereichsgrenze $G_O$ und Transportgeschwindigkeit V:

$$Y \sim \frac{1}{G_O} \cdot \frac{1}{V} \quad (1)$$

Es gilt außerdem für eine Meßtoleranz

$$\Delta \sim 1 / Y \quad (2)$$

Es wird mindestens einer dieser Parameter eingestellt, um bei gegebenen geometrischen Voraussetzungen, mindestens einen der anderen Parameter in vorgegebener Weise zu verändern und dadurch eine Anpassung an die Betriebssituation des jeweiligen Postversenders in der Weise zu erzielen, daß insgesamt eine Leistungssteigerung und damit Erweiterung des Einsatzbereiches der dynamischen Waage erzielt wird. In der Regel werden zwei Parameter eingestellt, woraus sich mittels der Gleichung (1) oder (2) der dritte Parameter unmittelbar ableitet.

Der geübte Bediener gibt beispielsweise den Meßbereich mittels der Softkeys SK1 und SK2 aufgrund seiner Erfahrungswerte ein, nachdem er den Poststapel abgeschätzt hat. Beispielsweise wird abgeschätzt, daß keine Briefe über 500g Gewicht enthalten sind. Am Userinterface war zuvor mittels Schirmbild 300 die Versandart INFOPOST GROSS und damit ein Meßbereich von 1000g und ein zugehöriger Toleranzwert A = ±1g eingestellt worden. Der Mikroprozessor der Steuerung kann mit den zwei Werten Go = 500g und Δ = ±1g den dritten Parameter, nämlich die Transportgeschwindigkeit V, über eine zweidimensionale Matrix bestimmen und anzeigen. Ergibt die Matrix, wie im vorliegenden Fall einen von Null abweichenden Wert für V = 30 cm/s, dann ist ein dynamisches Wiegen zulässig. Werden die angezeigten Wiegeparameter durch Betätigen der Enter-Taste bestätigt, wird das System auf der Grundlage dieser Parameter eingestellt. Sowohl die erfindungsgemäße Matrix als auch die Veränderung von Betriebsparametern ist im nichtflüchtigen Speicher 23 gespeichert. Beispiel für eine Matrix:

| | Go | | | | | |
|---|---|---|---|---|---|---|
| Δ | 20g | 50g | 100g | 200g | 500g | 1000g |
| ±5g | 200 cm/s | 200 cm/s | 200 cm/s | 120 cm/s | 70 cm/s | 45 cm/s |
| ± 2,5g | 200 cm/s | 200 cm/s | 120 cm/s | 70 cm/s | 50 cm/s | 35 cm/s |
| ± 1g | 200 cm/s | 100 cm/s | 60 cm/s | 40 cm/s | 30 cm/s | 20 cm/s |
| ± 0,5g | 120 cm/s | 60 cm/s | 40 cm/s | 30 cm/s | 20 cm/s | 0 |
| ± 0,25g | 70 cm/s | 40 cm/s | 30 cm/s | 20 cm/s | 0 | 0 |

Beim Wert Null ist die Kombination aus Toleranz- und Gewichtgrenzwert nicht mehr sinnvoll. In solchen Fällen ist nur ein statisches Wiegen ausführbar. Aufgrund des Antriebs stehen als maximale Transportgeschwindigkeit 200 cm/s zur Verfügung. Eine Kombination beispielsweise der Werte Go = 20g und Δ = ±5g kann somit nicht mehr zu einer Erhöhung der realen Transportgeschwindigkeit führen. Um in der Praxis einen verwertbaren Zusammenhang dieser drei Einstellparameter zu gewinnen, sind natürlich konstruktiv bestimmte Anpaßfaktoren und Konstanten erforderlich.

Diese Ermittlungen werden vorzugsweise empirisch vom Hersteller durchgeführt. Eine diskrete Stufung der Parameter ist ausreichend und ermöglicht eine rasche Ermittlung auf der Basis entsprechender Matrizen (für V und ebenso für Go und Δ).Im Falle, daß nur zwei Parameter einstellbar sind, z.B. die Transportgeschwindigkeit nicht, läßt sich der Zusammenhang in Listen (für Go und Δ) darstellen, die wieder im nichtflüchtigen Speicher 23 der dynamischen Waage resident gespeichert ist.

Die Figur 10 zeigt eine Darstellung der Taktleistung der Waage bei Mischpostverarbeitung als Diagramm. Nur der NICHT WIEGE MODUS (nicht dargestellt) führt zu einer Taktleistung von ca. 100% der Taktleistung einer Frankiermaschine, wenn die Abstände zwischen zwei Poststücken minimiert werden. Andernfalls sind maximal 66% % der Taktleistung erzielbar. So erfolgt bei schweren Poststücken (rechte Seite der Darstellung) ein langsames und halbdynamisches Wiegen. Nach dem Diagramm wird deshalb nur ca. ein Drittel der Taktleistung einer Frankiermaschine erreicht. Die Vorteile der Erfindung ergeben sich beim dynamischen Betrieb im unteren (bis 500 g) und mittleren Gewichtsbereich (500 bis 1000g) durch eine um 7 bis 27% höhere Taktleistung des Systems gegenüber einem System nach dem Stand der Technik. Die höhere Taktleistung resultiert daraus, daß es in der Regel bei geeigneter Einstellung der Parameter unnötig ist, den automatischen Ablauf der Postbearbeitung zu unterbrechen. Im Folgenden soll der Verfahrensablauf für die Wiegung eines Briefes aus dem Stapel an einem Ausführungsbeispiel erläutert werden.
Erreicht ein Brief den Bereich der dynamischen Waage, wird über den Sensor S1 die Vorderkante des Briefes detektiert und dieses Signal an die Steuereinheit weitergeleitet. Je nach eingestelltem Betriebsmodus reagiert die Steuereinheit.

Ist der NICHT WIEGE MODUS eingestellt, wird kein Wiegevorgang ausgelöst. Die Geschwindigkeit für den Transportmechanismus ist auf maximal gesteuert. Es gibt keine obere Meßbereichsgrenze. Lediglich die mechanische Beschädigung der Wiegeplattform setzt eine obere Grenze, die aber normalerweise ein Mehrfaches über der maximalen oberen Meßbereichsgrenze liegt.
Ist der Modus mit Schwellwertüberwachung eingestellt, wird ein Wiegevorgang ausgelöst. Nach Ablauf der Meßzeit liegt ein Gewichtswert vor, der nun mit dem voreingestellten gespeicherten Schwellwert verglichen wird. Der Einfachheit halber wird von einem oberen Schwellwert ausgegangen. Für den anderen Modus mit einem unteren Schwellwert gelten die nachfolgenden Ausführungen sinngemäß. Dabei ergeben sich folgende Fälle:

1. Es wird der Schwellwert unterschritten: Der Brief wird weiter transportiert und in der angeschlossenen Frankiermaschine mit dem voreingestellten Porto frankiert.
2. Es wird der Schwellwert überschritten: Es wird ein entsprechendes Steuersignal generiert, daß in Abhängigkeit von der Systemkonfiguration eine Ausscheidung des Briefes aus dem Stapel ermöglicht. Ist zwischen die dynamische Waage und die Frankiereinheit eine an sich bekannte Aussteuereinheit eingefügt, so erhielt diese von der Steuereinheit der dynamischen Waage den Befehl zur Aussteuerung des betreffenden Briefes. Der Brief wird dann durch eine mechanisch betätigte Weiche oder Fallklappe aus dem normalen Briefstrom abgezweigt und kann gesondert behandelt werden. Ist eine solche Aussteuereinheit nicht Systembestandteil, so wird von der Steuereinheit ein Befehl an die Antriebseinheit des Transportmechansimus generiert, der den Brieftransport stoppt. Weiterhin geht eine Information an das Display, daß die eingestellte Grenze für das Porto überschritten wurde. Der entsprechende Brief kann dann manuell entfernt und die Verarbeitung erneut gestartet werden.

Ist der Modus WIEGEN eingestellt, liegt nach Ablauf der Meßzeit ein Gewichtswert vor. Letzterer sollte unterhalb der eingestellten Meßbereichsgrenze liegen. Das ist bereits dadurch möglich, daß im zweiten Betriebsmodus die Steuerung der Waage die Transportgeschwindigkeit auf eine vorbestimmte Größe herabsetzt. Prinzipiell sind folgen Fälle möglich:

3. Es wird die gewählte obere Meßbereichsgrenze Go unterschritten, so bedeutet dies, daß der Meßwert innerhalb des gültigen Meßbereiches liegt und daher hinreichend genau bestimmt werden konnte. Die Steuereinheit übermittelt den Meßwert an die Frankiereinheit, wo auf Grund weiterer postalischer Parameter mit Hilfe einer Portotabelle der Frankierwert ermittelt wird. Mit diesem individuell ermittelten Frankierwert wird der entsprechende Brief frankiert.
4. Es wird die gewählte obere Meßbereichsgrenze Go überschritten, so bedeutet dies, daß der Meßwert außerhalb des gültigen Meßbereiches liegt und daher nicht hinreichend genau bestimmt werden konnte. Das führt zum Anhalten des Brieftransportes und der Entfernung des Briefes oder zu dessen Aussteuerung. In einer anderen Ausführungsvariante ist es es möglich, den automatischen Ablauf auch für derartige Briefe aufrecht zu erhalten. Dazu übermittelt die Steuereinheit an die Antriebseinheit des Transportmechanismus den Befehl, den Brieftransport zu stoppen. Nach Ablauf einer Ausschwingzeit wird ein erneuter Wiegevorgang ausgelöst, diesmal in einem statischen Zustand der dynamischen Waage. Nach Ablauf der Meßzeit wird von der Steuereinheit der Startbefehl für den Weitertransport des Briefes an die Antriebseinheit übermittelt. Der statisch ermittelte Meßwert wird an die Frankiereinheit übertragen und dort der entsprechende Frankierwert ermittelt.

Die für den letzten Zustand beschriebene Lösung gewährleistet, daß auch bei Überschreitung des Meßbereiches die Verarbeitung des Poststapels vollautomatisch abläuft. Selbstverständlich benötigt der beschriebene Ablauf im Falle des den Meßbereich überschreitenden Gewichtes eine höhere Verarbeitungszeit als bei einem Versandstück, das von der Briefwaage noch dynamisch gemessen werden kann. Ursache dafür sind in erster Linie die Brems- und Beschleunigungsphase des Transportmechanismus. Hinzu kommt eine Zeitdauer für das Ausschwingen des Wiegetellers, deren Größe von Konstruktionsparametern der dynamische Waage abhängig ist und am zuverlässigsten empirisch vom Hersteller ermittel wird. Die eigentliche Meßzeit unterscheidet sich hingegen nicht von der im dynamischen Modus. Der beschriebene Ablauf ist immer noch um ein Vielfaches schneller als die Alternative der manuellen Benutzung einer externen statischen Waage für den entsprechenden Brief.
Gerade bei Versandstücken, die aufgrund ihres hohen Gewichtes den Meßbereich überschreiten, ist es von besonderer Bedeutung, daß ihr Flächenschwerpunkt sich zum Zeitpunkt der Messung in Transportrichtung gesehen etwa in der Mitte des Wiegetellers befindet. So kann gewährleistet werden, daß keine nennenswerten Drehmomente auf den Wiegeteller wirken und dann verfälschend auf die Wiegezelle übertragen werden. Für die übergroße Mehrzahl der Postversandstücke ist das Gewicht näherungsweise gleichmäßig über ihre Länge verteilt, die Mitte des Postversandstückes stellt also den Flächenschwerpunkt dar.
Mit der - in Figur 2 gezeigten - Anordnung kann nun eine für die Meßgenauigkeit optimale Positionierung des Postversandstückes wie folgt erreicht werden. Mit Hilfe von Sensoren wird die Brieflänge von der Steuereinheit 20 ermittelt.

Dazu wird der Sensor S1 am Briefeinlauf der Waage benutzt. Bei konstanter Transportgeschwindigkeit ergibt sich die Brieflänge als Zeit zwischen dem Signal "Brief da " und "Brief weg". Beide Binärsignale unterscheiden sich durch den Wechsel von 0 auf 1 bzw. 1 auf 0. Alternativ kann die Steuereinheit die Brieflänge auch von einer vorgeschalteten Briefvereinzelungseinrichtung übermittelt bekommen. Aus der bekannten Position der Vorderkante des Briefes und seiner Länge wird nun der Transportweg ermittelt, der bis zur optimalen Position des Briefes von diesem noch zurückgelegt werden muß. Bei konstanter Transportgeschwindigkeit entspricht diesem Restweg eine bestimmte Transportzeit. Nach Ablauf dieser Zeit erkennt die Steuereinheit 20, daß die von der Wiegezelle 7 gelieferten Meßsignale gültig sind und verarbeitet diese weiter. Im Falle daß ein Brief halbdynamisch gewogen werden soll, wird ein Stopsignal an den Antrieb 49 der Transporteinrichtung 4 ausgegeben. Eine noch präzisere Positionierung wird erzielt, indem die Transporteinrichtung stufenweise ihre Geschwindigkeit bis auf Null verringert.

Zusätzlich können weitere im Transportweg angeordnete Sensoren Rückmeldung über die aktuelle Position der Briefvorderkante geben.

Die bisherigen Ausführungen basieren auf einer bestimmten Einstellung der Parameter Meßgenauigkeit, obere Meßbereichsgrenze und Transportgeschwindigkeit. Diese Einstellung legt die Leistungsfähigkeit (Meßgenauigkeit, Transportgeschwindigkeit) und den Einsatzbereich (obere Meßbereichsgrenze) der dynamischen Waage fest. Letztere zu verändern ist möglich, wenn einer oder zwei der Parameter gezielt geändert werden. Die Bedingungen dafür sollen im Folgenden erläutert werden.

Wenn die Anforderungen des Postversenders klar umrissen sind und sich voraussichtlich wenig ändern, dann ist eine Einstellung dieser Parameter bereits bei der Herstellung, beim Vertrieb oder der Installation der dynamischen Waage möglich. Ein Beispiel für eine solche Voreinstellung der dynamischen Waage ist ein Postversender, der nur große Formate von Infopost zu versenden hat. Dadurch ist es möglich, lediglich einen Schwellwert zu überwachen. Ohne in die Konstruktionsparameter der Waage, wie z.B. die Wahl eines bestimmten Wiegesensors, einzugreifen, ist es möglich, durch Eingabe von Daten eine optimale Anpassung der Waage zu erzielen. In diesem Fall kann diese Anpassung so aussehen, daß die 1000g-Grenze mit einer relativ groben Genauigkeit von 10g überwacht wird. Dabei kann in Kauf genommen werden, daß wahrscheinlich in 1% der Fälle ein zu hohes Porto bezahlt wird. Dadurch ist es aber möglich, eine maximale Transportgeschwindigkeit zu erhalten und damit einen besonders hohen Durchsatz an entsprechenden Poststücken zu erzielen. Diese Transportgeschwindigkeit kann bis um mindestens das Doppelte höher sein, als bei einer unveränderlichen maximalen Meßgenauigkeit von 1g. Die erforderliche Einstellung der Daten kann durch verschiedene Eingabemittel vorgenommen werden. Sie kann vorteilhafterweise durch Eingabe von Daten in einen residenten Datenspeicher erfolgen bzw. durch Austausch dieses Speichers gegen einen solchen mit entsprechend passenden Daten. In einer speziellen Variante wird bei Aufstellung der dynamischen Waage beim Kunden diese Einstellung durch einen - nicht dargestellten - Servicetechniker vorgenommen. Letzterer schließt hierzu an die serielle Schnittstelle 25 einen Servicecomputer an. Dieser Servicecomputer enthält eine ähnliche Bedienerführung, wie sie anhand des Userinterfaces gemäß der Figuren 5 bis 9 dargestellt wurde.

Im Allgemeinen sind die Anforderungen des Postversenders nicht konstant und müssen eine große Einsatzbreite abdecken. In diesem Fall wird die Eingabe der Einstelldaten vom Postversender selbst vorgenommen. Dazu ein Beispiel: Der Postversender hat zuletzt eine Mailingaktion an eine größere Kundengruppe durchgeführt. Alle Briefe hatten den gleichen Inhalt und wurden deshalb kostengünstig als Infopost versendet. Da umfangreiches Prospektmaterial beizulegen war, blieb nur der Versand als "Infopost Maxi". Die gewählte Einstellung der dynamischen Waage (Überwachung der 1000g-Grenze) entsprach also dem obigen Beispiel. Als nächstes liegt nun ein Stapel Mischpost an. Die Inhalte reichen von Rechnungen (minimales Gewicht) über Diverses (mittleres, nicht näher bestimmbares Gewicht) bis zu gezielten Angeboten mit ausgewähltem Prospektmaterial (max. 500g). Die Randbedingungen für eine optimale Einstellung sind demnach hier die zulässige Meßgenauigkeit und die obere Meßbereichsgrenze = 500g. Gemäß dem für diesen Waagentyp ermittelten Zusammenhang gibt es eine bestimmte Transportgeschwindigkeit, die gerade noch die Erreichung der beiden Zielgrößen zulässige Meßgenauigkeit und obere Meßbereichsgrenze = 500g ermöglicht. Der Postversender gibt unterstützt durch einen Userdialog vorzugsweise an der Frankiermaschine beide Werte ein. Die beiden Einstelldaten werden an die Steuereinheit der dynamischen Waage übertragen. Dort ist der Zusammenhang zwischen den Betriebsparametern, der für diesen Waagentyp gültig ist, vom Hersteller gespeichert worden. Auf dieser Basis wird der dritte Einstellparameter ermittelt. Beispielsweise ist bei $\Delta = \pm 1g$ die maximale Transportgeschwindigkeit 30 cm/s. Dieser ermittelte Einstellparameter wird zur Bestätigung durch den Postversender zur Anzeige gebracht. Nach Quittierung wird dieser Parameter eingespeichert und dann über das entsprechende Port der Steuereinheit an den entsprechenden Aktuator übertragen. In diesem Beispiel würde ein entsprechend aufbereiteter Sollwert an den Antrieb (z.B. Schrittmotor) für den Brieftransport übertragen. Das Einspeichern der Daten erfolgt in Speicherbereiche B1 bis B3, welche entspechend der drei vorgenannten Matrizen für V, Go und A im nichtflüchtigen Speicher 23 vorgesehen sind. Dabei werden Daten von der Frankiermaschine zur dynamischen Waage übertragen. Die Kommunikation zwischen einer automatischen Zuführung, dynamischer Waage und der Frankiermaschine kann beispielsweise in ähnlicher Art und Weise ablaufen, wie dies bereits in der deutschen Anmeldung DE 197 11 997 A1 unter dem Titel: Anordnung zur Kommunikation zwischen einer Basisstation und weiteren Stationen einer Postbearbeitungsmaschine und zu deren Notabschaltung, beschrieben wurde.

Anstelle des Mikroprozessors können auch Mikrocontroller oder anderwenderspezifische Schaltkreise (ASIC's) eingesetzt werden.

Die Erfindung ist nicht auf die vorliegenden Ausführungsform beschränkt, da offensichtlich weitere andere Ausführungen der Erfindung, innerhalb des Umfangs der beiliegenden Ansprüche, entwickelt bzw. eingesetzt werden können, die vom gleichen Grundgedanken der Erfindung ausgehend, die von den anliegenden Ansprüchen umfaßt werden.

## Patentansprüche

1. Verfahren zur Steuerung einer dynamischen Waage, die gemischtes Postgut mit unterschiedlichem Gewicht verarbeiten kann, wobei das Postgut anschließend eine weitere Verarbeitungsstation durchläuft, g e - **kennzeichnet durch**,

   - Einstellen der dynamischen Waage entsprechend den jeweiligen Anforderungen an die Bearbeitung eines Mischpoststapels über ein Eingabemittel (86), wobei das Einstellen wahlweise anhand ausgewählter Versandparameter und/oder Betriebsparametern erfolgt,
   - Verändern von Betriebsparametern und Daten entsprechend der vorgenommenen Einstellung und Speichern in einem nichtflüchtigen Speicher (23) und
   - Wiegen eines zugeführten Poststückes, wobei eine Steuerung (20) der dynamischen Waage eine Transporteinrichtung (4) der Waage derart ansteuert, daß das Poststück in Abhängigkeit von den eingestellten Betriebsparametern und Daten zur weiteren Verarbeitungsstation (80) transportiert wird.

2. Verfahren, nach Anspruch 1, **dadurch gekennzeichnet, daß** das Einstellen der dynamischen Waage mittels dreier Wiegeparameter, Meßbereich, Genauigkeit und Geschwindigkeit erfolgt, welche in ihrer Größe voneinander abhängen, so daß die Veränderung eines Parameters zur Veränderung mindestens eines der anderen Parameter führt, daß die Veränderung von der Steuerung (20) der Waage überwacht und über eine Anzeigeeinheit (88) angezeigt wird.

3. Verfahren, nach Anspruch 1, **gekennzeichnet durch** die Schritte:

   - Feststellen des Überschreitens der gewählten oberen Meßbereichsgrenze,
   - Übermitteln eines Befehls von der Steuereinheit an die Antriebseinheit des Transportmechanismus den Brieftransport zu stoppen,
   - Anhalten des Brieftransportes,
   - Feststellen des Ablaufes einer Ausschwingzeit und
   - Auslösen eines erneuten Wiegevorganges, wobei sich die dynamische Waage in einem statischen Zustand befindet,
   - Übermitteln eines Startbefehls von der Steuereinheit an die Antriebseinheit nach Ablauf der Meßzeit für den Weitertransport des Briefes und
   - Übertragen des statisch ermittelten Meßwertes an die Frankiereinheit, um dort den entsprechenden Frankierwert anhand einer Portogebührentabelle zu ermitteltn und auf das Poststück zu drucken.

4. Verfahren, nach Anspruch 1, **dadurch gekennzeichnet, daß** ein Wiegen mit einer Auswertung der Gewichtsmessung erfolgt, wobei in Abhängigkeit von der Auswertung die Steuerung der dynamische Waage den Transport des Poststückes zur weiteren Verarbeitungsstation stromabwärts ohne Veränderung der Poststücktransportgeschwindigkeit erlaubt oder eine automatische Umschaltung vornimmt, wenn die Genauigkeitsklasse des ersten Betriebsmodus nicht eingehalten wurde, und daß der kontinuierliche Betrieb dann mit einer langsameren Transportgeschwindigkeit fortgesetzt wird.

5. Verfahren, nach Anspruch 4, **dadurch gekennzeichnet, daß** bei der Auswertung der Gewichtsmessung im ersten Betriebsmodus der gemessene Gewichtswert anhand eines Schwellwertes überwacht wird.

6. Verfahren, nach Anspruch 4, **dadurch gekennzeichnet, daß** der gemessene Gewichtswert anhand eines oberen Schwellwertes überwacht wird und daß im Ergebnis der Schwellwertüberwachung bei Unterschreitung des Schwellwertes der Brief weiter transportiert und in der angeschlossenen Frankiermaschine mit dem voreingestellten Porto frankiert wird.

7. Verfahren, nach Anspruch 4, **dadurch gekennzeichnet, daß** nach der automatischen Umschaltung die Steuerung der Waage die Transportgeschwindigkeit auf die Größe Null herabsetzt und nach erneutem Wiegen den Transport des Poststückes fortsetzt.

8. Anordnung zur Steuerung einer dynamischen Waage, mit einer Wiegezelle, mit Sensoren und mit einer Transporteinrichtung (4), die mit einer Steuereinheit (20) verbunden sind, wobei an die Waage stromabwärts eine weitere Verarbeitungsstation (80) angekoppelt ist,
**dadurch gekennzeichnet,**

- **daß** Sensoren (S1, S2) für die Rückmeldung der Poststückposition im Transportweg angeordnet sind,
- **daß** die Transporteinrichtung (4) der Waage einen steuerbaren Antrieb (49,44) umfaßt,
- **daß** die Steuereinheit (20) einen Mikroprozessor (21) aufweist, der mit einem Programmspeicher (22) und einem nichtflüchtigen Speicher (23) verbunden ist, wobei der Mikroprozessor (21) derart programmiert ist:

  a) daß im nichtflüchtigen Speicher (23) Eingaben, die über ein Eingabemittel (86) eingegeben wurden, unter Berücksichtigung ausgewählter Versandparameter und/oder Betriebsparameter gespeichert werden und
  b) daß das Poststück A in Abhängigkeit von den eingestellten Betriebsparametern und Daten zur weiteren Verarbeitungsstation (80) transportiert wird.

9. Anordnung, nach Anspruch 8, **dadurch gekennzeichnet, daß** eine Veränderung eines Parameters zur Veränderung mindestens eines der anderen Parameter im nichtflüchtigen Speicher (23) führt, wobei eine diskrete Stufung der Parameter eine rasche Ermittlung auf der Basis entsprechend gespeicherter Daten ermöglicht.

10. Anordnung, nach Anspruch 8, **dadurch gekennzeichnet, daß** die Verarbeitungsstation (80) eine Frankiermaschine ist, mit deren Tastatur (86) das Einstellen der dynamischen Waage hinsichtlich ihrer Betriebsparameter und Daten erfolgt.

11. Anordnung, nach Anspruch 8, **dadurch gekennzeichnet, daß** der Mikroprozessor (21) programmiert ist, so daß in den nichtflüchtigen Speicher (23) Eingaben über ein Userinterface (86, 88) der Verarbeitungsstation (80) eingegeben werden.

12. Anordnung, nach Anspruch 8, **dadurch gekennzeichnet, daß** die Transporteinrichtung (4) der Waage einen Motor (49) mit steuerbarer Drehzahl umfaßt, wobei durch die Steuereinheit (20) entsprechende Steuerbefehle erzeugt werden, durch welche die Transportgeschwindigkeit in der Waage verändert werden kann.

13. Anordnung, nach Anspruch 8, **dadurch gekennzeichnet, daß** die Transporteinrichtung (4) der Waage einen Gleichstrommotor (49) mit steuerbarer Drehzahl umfaßt, wobei durch die Steuereinheit (20) die an den Motor (49) angelegte Betriebsspannung auf eine vorbestimmte Größe eingestellt wird, so daß die Transportgeschwindigkeit in der Waage verändert werden kann.

14. Anordnung, nach Anspruch 13, **dadurch gekennzeichnet, daß** von der Steuerung (20) die Transportgeschwindigkeit des Poststückes A in der Waage bis zum Stillstand vermindert werden kann.

15. Anordnung, nach einem der Ansprüche 8 bis 14, **dadurch gekennzeichnet, daß** ein Treiber (26) zwischen Antrieb (49,44) und die Steuereinheit (20) geschaltet ist.

16. Anordnung, nach einem der Ansprüche 8 bis 12, **dadurch gekennzeichnet, daß** eine Vielzahl an Sensoren (S1, S2, ..., ...) für die Rückmeldung der Poststückposition im Transportweg angeordnet und an die Steuereinheit (20) geschaltet sind und daß der Mikroprozessor (21) zur Bestimmung des für eine Gewichtsmessung wirksamen Transportweges programmiert ist.

## Claims

1. A method for controlling a dynamic scale that can process mixed postal items of different weight, wherein the postal items subsequently passes a further processing station,
**characterized by**

- setting the dynamic scale in accordance with the respective requirements on the handling of a stack of mixed postal items with the help of an input means (86), the setting being made on the basis of either selected shipping parameters and/or operating parameters;
- changing of operating parameters and data according to the setting made and storage in a non-volatile memory (23); and
- weighing of a postal item fed, wherein a control unit (20) of the dynamic scale activates a transport device (4) of the scale in such a manner that the postal item is transported to the further processing station (80) depending on the operating parameters and data set.

**2.** A method according to claim 1, **characterized in that** the setting of the dynamic scale is made by means of three weighing parameters, measuring range, accuracy and speed, the values of which are interdependent so that the change of one parameter leads to the change of at least one of the other parameters; that the change is monitored by the control unit (20) of the scale and is shown on a display unit (88).

**3.** A method according to claim 1, **characterized by** the steps:

- detection of an exceeding of the selected upper limit of the measuring range;
- transmission of an instruction to stop the letter transport from the control unit to the drive unit of the transport mechanism;
- stopping of the letter transport;
- determination of the end of a dying-out time; and
- triggering of another weighing process, wherein the dynamic scale is in a static condition;
- transmission, from the control unit to the drive unit, of a start instruction for the further transport of the letter upon expiry of the measuring time; and
- transmission of a statically determined measuring value to the franking unit so that the respective postage value can be determined on the basis of a postage fee table and printed on the postal item there.

**4.** A method according to claim 1, **characterized in that** a weighing is carried out with an evaluation of the weight measurement,
wherein, depending on said evaluation, the control unit of the dynamic scale either permits transport of the postal item to the further processing station downstream without changing the postal item transport speed or makes an automatic change-over when the accuracy class of the first operating mode was not met and that, in such case, the continuous operation is continued at a lower transport speed.

**5.** A method according to claim 4, **characterized in that**, in the evaluation of the weight measurement in the first operating mode, the weight value measured is monitored on the basis of a threshold value.

**6.** A method according to claim 4, **characterized in that** the weight value measured is monitored on the basis of an upper threshold value and that as a result of the threshold-value monitoring, when the value remains below the threshold, the letter is transported on and is franked with the preset postage in the franking machine.

**7.** A method according to claim 4, **characterized in that**, following said automatic change-over, the control unit of the scale sets the transport speed down to a zero value and, after another weighing process, continues the transport of the postal item.

**8.** An arrangement for controlling a dynamic scale comprising a weighing cell, sensors and a transport device (4) that are connected with a control unit (20), wherein a further processing station (80) is coupled to the scale in downstream direction,
**characterized in**

- **that** sensors (S1, S2) are arranged on the transport path for giving feedback on the position of the postal item;
- **that** the transport device (4) of the scale comprises a controllable drive (49, 44);
- **that** the control unit (20) includes a microprocessor (21) that is connected to a program memory (22) and a non-volatile memory (23), said microprocessor (21) being programmed in such a manner:

  a) that input entered via an input means (86) are stored in the non-volatile memory (23), taking into account selected shipping parameters and/or operating parameters; and
  b) that the postal item A is transported to the further processing station (80) depending on the operating parameters and data set.

9. An arrangement according to claim 8, **characterized in that** a change of one parameter leads to the change of at least one of the other parameters in the non-volatile memory (23), wherein a discrete grading of the parameters allows for a quick determination on the basis of respectively stored data.

10. An arrangement according to claim 8, **characterized in that** processing station (80) is a franking machine by means of the keyboard (86) of which the dynamic scale is set with regard to its operating parameters and data.

11. An arrangement according to claim 8, **characterized in that** microprocessor (21) is programmed in such a way that input can be entered into the non-volatile memory (23) via a user interface (86, 88) of the processing station (80).

12. An arrangement according to claim 8, **characterized in that** the transport device (4) of the scale comprises a motor (49) with controllable speed, wherein the control unit (20) generates respective control instructions by means of which the transport speed in the scale can be changed.

13. An arrangement according to claim 8, **characterized in that** the transport device (4) of the scale comprises a DC motor (49) with controllable speed, wherein the control unit (20) sets the operating voltage applied to motor (49) to a pre-defined value so that the transport speed in the scale can be changed.

14. An arrangement according to claim 13, **characterized in that** the control unit (20) can reduce the transport speed of postal item A in the scale down to standstill.

15. An arrangement according to any of claims 8 to 14, **characterized in that** a driver (26) is connected between drive (49, 44) and control unit (20).

16. An arrangement according to any of claims 8 to 12, **characterized in that** a plurality of sensors (S1, S2, ..., ...) for giving feedback on the position of the postal item is arranged on the transport path and connected to the control unit (20) and that the microprocessor (21) is programmed for determining the transport path effective for a weight measurement.

**Revendications**

1. Procédé de commande d'une balance dynamique pouvant traiter des objets postaux variés de poids différents, lesdits objets postaux passant ensuite par une autre station de traitement, **caractérisé par,**

   - le réglage de la balance dynamique conformément aux exigences respectives concernant le traitement d'une pile d'objets postaux variés via un moyen de saisie (86), le réglage se faisant au choix au moyen de paramètres d'envoi sélectionnés et/ou de paramètres de fonctionnement,
   - la modification de paramètres de fonctionnement et de données conformément au réglage effectué et la mise en mémoire dans une mémoire non-volatile (23) et
   - le pesage d'un objet postal acheminé, un dispositif de commande (20) de la balance dynamique contrôlant un dispositif de transport (4) de la balance de telle manière que l'objet postal est transporté vers l'autre station de traitement (80) en fonction des paramètres de fonctionnement et des données réglés.

2. Procédé selon la revendication 1 **caractérisé en ce que** le réglage de la balance dynamique est réalisé au moyen de trois paramètres de pesage : plage de mesure, exactitude et vitesse, dont la grandeur de chacun dépend de celle des autres, de telle manière que la modification d'un paramètre conduit à la modification d'au moins un des autres paramètres, **en ce que** ladite modification est contrôlée par le dispositif de commande (20) de la balance et affichée via une unité d'affichage (88).

3. Procédé selon la revendication 1, **caractérisé par** les étapes suivantes :

   - Constatation du dépassement de la limite supérieure sélectionnée de la plage de mesures,
   - Transmission d'un ordre de l'unité de commande à l'unité d'entraînement du mécanisme de transport dans le but de stopper le transport du courrier,

- Arrêt du transport du courrier,
- Constatation du déroulement d'un temps d'amortissement et
- Déclenchement d'un nouveau processus de pesage, la balance dynamique se trouvant dans un état statique,
- Transmission d'une instruction de démarrage de l'unité de commande à l'unité d'entraînement après l'écoulement du temps de mesure pour l'acheminement du courrier et
- Transmission de la valeur de mesure calculée de manière statique à l'unité d'affranchissement, pour y calculer la valeur d'affranchissement correspondante au moyen d'un tableau de frais de port et pour l'imprimer sur l'objet postal.

**4.** Procédé selon la revendication 1 **caractérisé en ce qu**'un pesage avec une évaluation de la mesure pondérale est effectué, le dispositif de commande de la balance dynamique permettant, en fonction de ladite évaluation, le transport en aval de l'objet postal vers l'autre station de traitement sans modification de la vitesse de transport de l'objet postal ou opérant une inversion automatique, si la qualité d'exactitude du premier mode de fonctionnement n'a pas été respectée, et en ce que le fonctionnement continu est ensuite poursuivi avec une vitesse de transport plus lente.

**5.** Procédé selon la revendication 4 **caractérisé en ce que** lors de l'évaluation de la mesure pondérale en premier mode de fonctionnement, la valeur pondérale mesurée est contrôlée au moyen d'une valeur de seuil.

**6.** Procédé selon la revendication 4 **caractérisé en ce que** la valeur pondérale mesurée est contrôlée au moyen d'une valeur de seuil supérieure et **en ce que**, suite au contrôle de la valeur de seuil, lors du dépassement négatif de la valeur de seuil, le courrier est transporté plus loin et affranchi avec le port préréglé dans la machine à affranchir raccordée.

**7.** Procédé selon la revendication 4 **caractérisé en ce qu**'après l'inversion automatique, le dispositif de commande de la balance réduit la vitesse de transport à la grandeur zéro et en ce qu'après un autre pesage, ledit dispositif de commande de la balance poursuit le transport de l'objet postal.

**8.** Disposition pour la commande d'une balance dynamique, pourvue d'une cellule de pesage, de capteurs et d'un dispositif de transport (4) reliés à une unité de commande (20), une autre station de traitement (80) étant couplée en aval à la balance,
**caractérisée,**

- **en ce que** sont disposés des capteurs (S1, S2) pour l'information en retour de la position de l'objet postal dans la voie de transport,
- **en ce que** le dispositif de transport (4) de la balance comprend un dispositif d'entraînement contrôlable (49,44),
- **en ce que** l'unité de commande (20) comporte un microprocesseur (21) relié à une mémoire programme (22) et à une mémoire non-volatile (23), le microprocesseur (21) étant programmé de telle manière

  a) que, dans la mémoire non-volatile (23), des entrées saisies via un moyen de saisie (86) sont mémorisées en tenant compte des paramètres d'envoi sélectionnés et/ou des paramètres de fonctionnement et
  b) que l'objet postal A est transporté vers l'autre station de traitement (80) en fonction des paramètres de fonctionnement et des données réglés.

**9.** Disposition selon la revendication 8 **caractérisée en ce qu**'une modification d'un paramètre conduit à la modification d'au moins un des autres paramètres dans la mémoire non-volatile (23), une graduation discrète des paramètres permettant un calcul rapide sur la base conforme aux données mémorisées.

**10.** Disposition selon la revendication 8 **caractérisée en ce que** la station de traitement (80) est une machine à affranchir, son clavier (86) servant à effectuer le réglage de la balance dynamique en tenant compte de ses paramètres de fonctionnement et données.

**11.** Disposition selon la revendication 8 **caractérisée en ce que** le microprocesseur (21) est programmé de telle manière que, dans la mémoire non-volatile (23), les entrées sont saisies via une interface utilisateur (86, 88) de la station de traitement (80).

**12.** Disposition selon la revendication 8 **caractérisée en ce que** le dispositif de transport (4) de la balance comprend un moteur (49) avec vitesse contrôlable, des instructions de commande correspondantes étant produites par l'unité de commande (20), lesdites instructions de commande pouvant modifier la vitesse de transport dans la balance.

13. Disposition selon la revendication 8 **caractérisée en ce que** le dispositif de transport (4) de la balance comprend un moteur à courant continu (49) avec vitesse contrôlable, la tension de fonctionnement appliquée au moteur (49) étant réglée à une grandeur prédéterminée par l'unité de commande (20) de telle manière que la vitesse de transport dans la balance peut être modifiée.

14. Disposition selon la revendication 13 **caractérisée en ce que** la vitesse de transport de l'objet postal A dans la balance peut être réduite par le dispositif de commande (20) jusqu'à l'arrêt.

15. Disposition selon l'une quelconque des revendications 8 à 14 **caractérisée en ce qu'**un pilote (26) est monté entre le dispositif d'entraînement (49,44) et l'unité de commande (20).

16. Disposition selon l'une quelconque des revendications 8 à 12 **caractérisée en ce qu'** une pluralité de capteurs (S1, S2, ..., ...) pour l'information en retour de la position de l'objet postal, sont disposés dans la voie de transport et couplés à l'unité de commande (20) et **en ce que** le microprocesseur (21) est programmé pour la détermination de la voie de transport efficace pour une mesure pondérale.

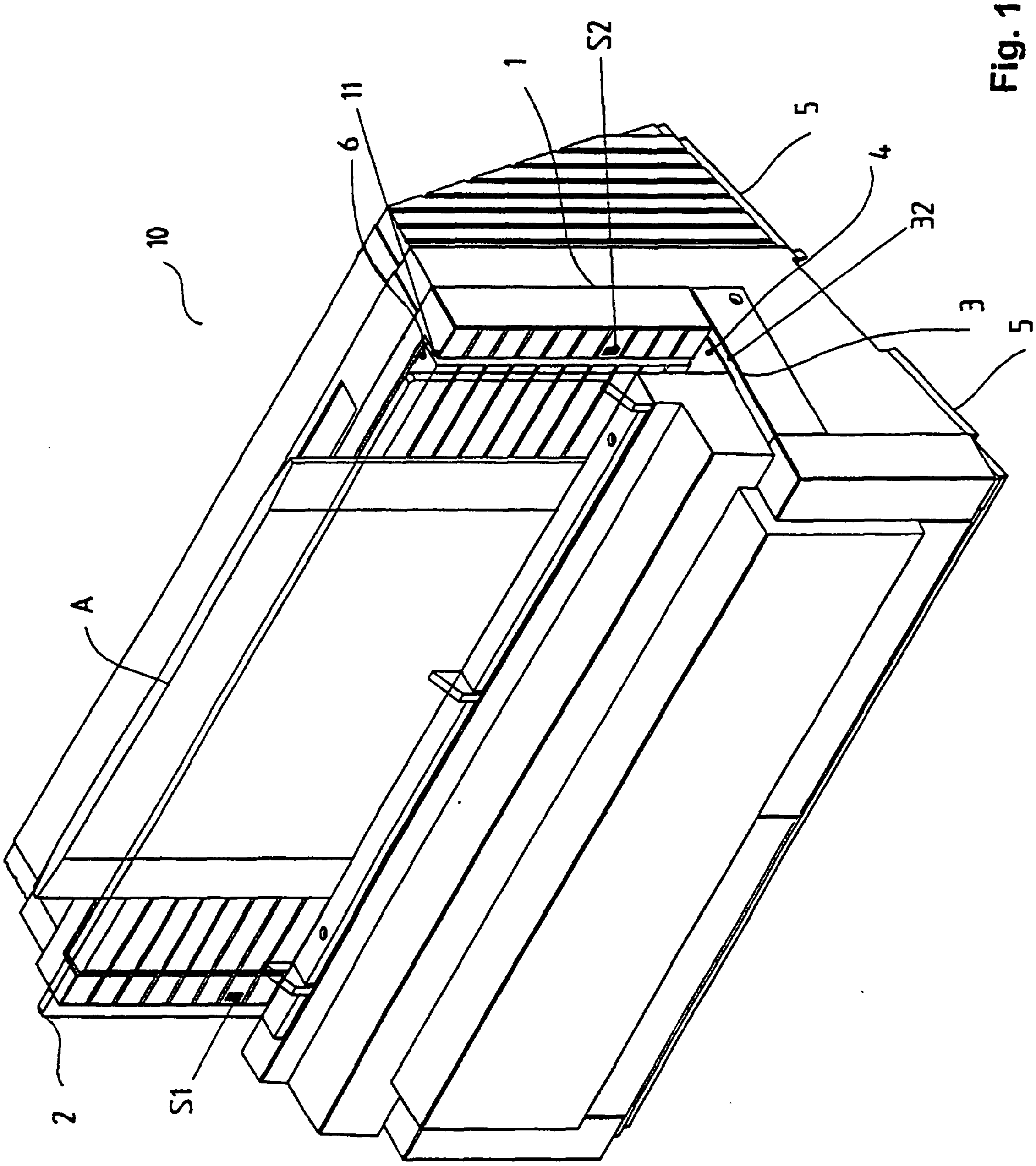


Fig. 1

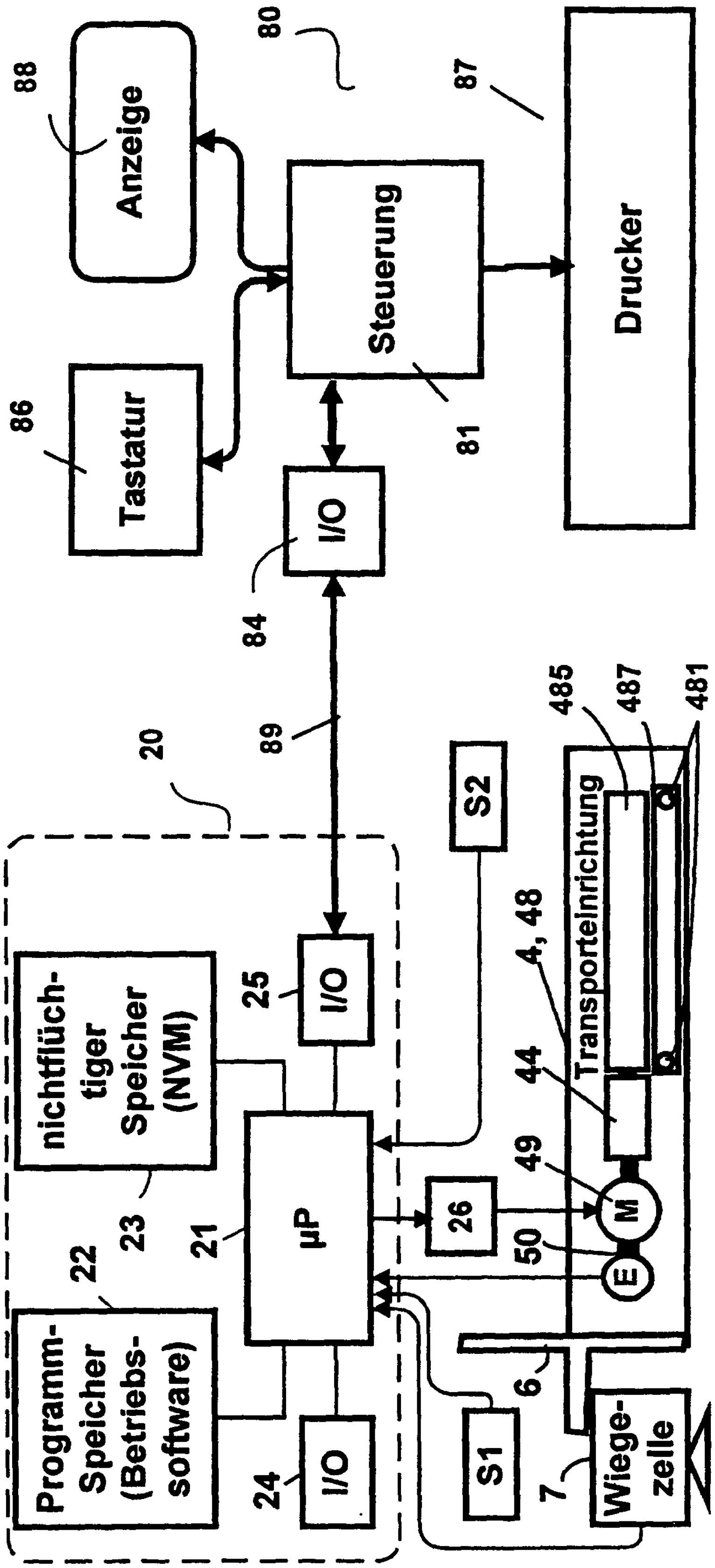
Anzeige
Tastatur
Steuerung
Drucker
I/O
nichtflüch-
tiger
Speicher
(NVM)
Programm-
Speicher
(Betriebs-
software)
µP
I/O
I/O
S1
S2
26
M
E
Wiege-
zelle
Transporteinrichtung
80
81
84
86
87
88
89
20
21
22
23
24
25
4, 48
44
49
50
6
7
485
487
481

Fig. 2

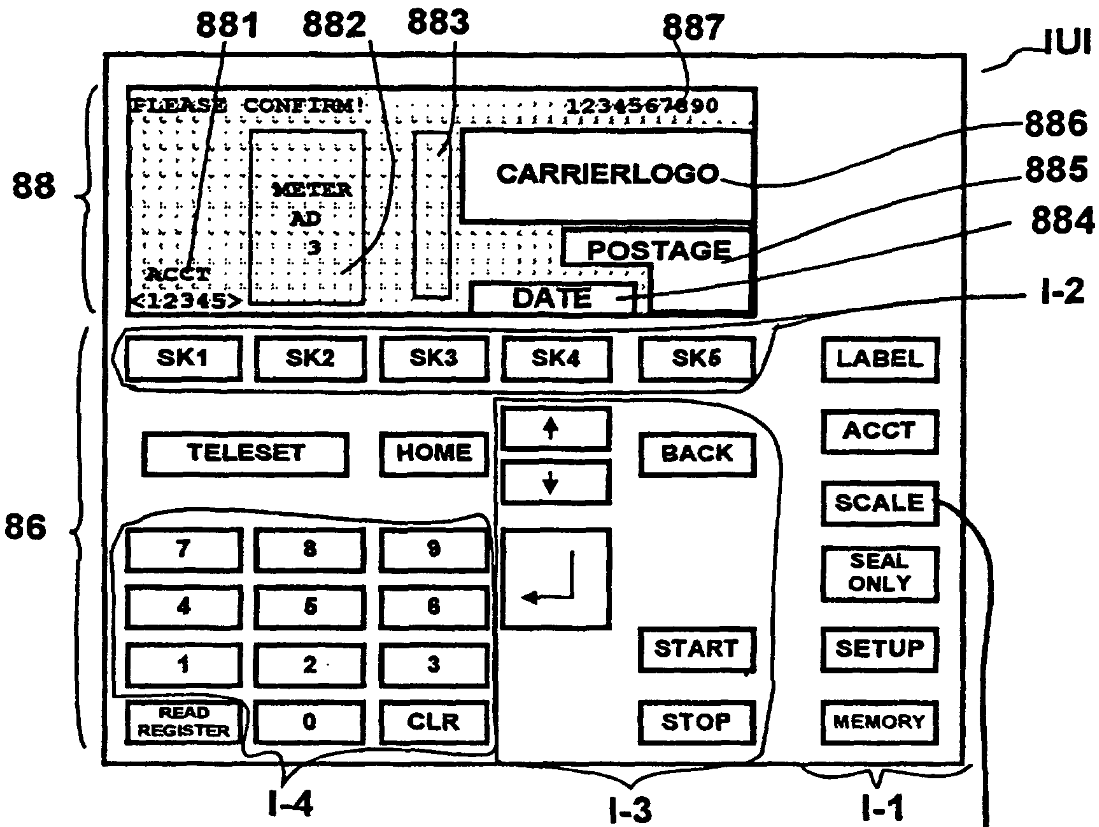
881
882
883
887
IUI
PLEASE CONFIRM!
1234567890
886
885
884
88
METER
AD
3
CARRIERLOGO
POSTAGE
DATE
ACCT
<12345>
I-2
SK1
SK2
SK3
SK4
SK5
LABEL
ACCT
TELESET
HOME
BACK
SCALE
86
7
8
9
SEAL ONLY
4
5
6
START
SETUP
1
2
3
READ REGISTER
0
CLR
STOP
MEMORY
I-4
I-3
I-1

Fig. 3

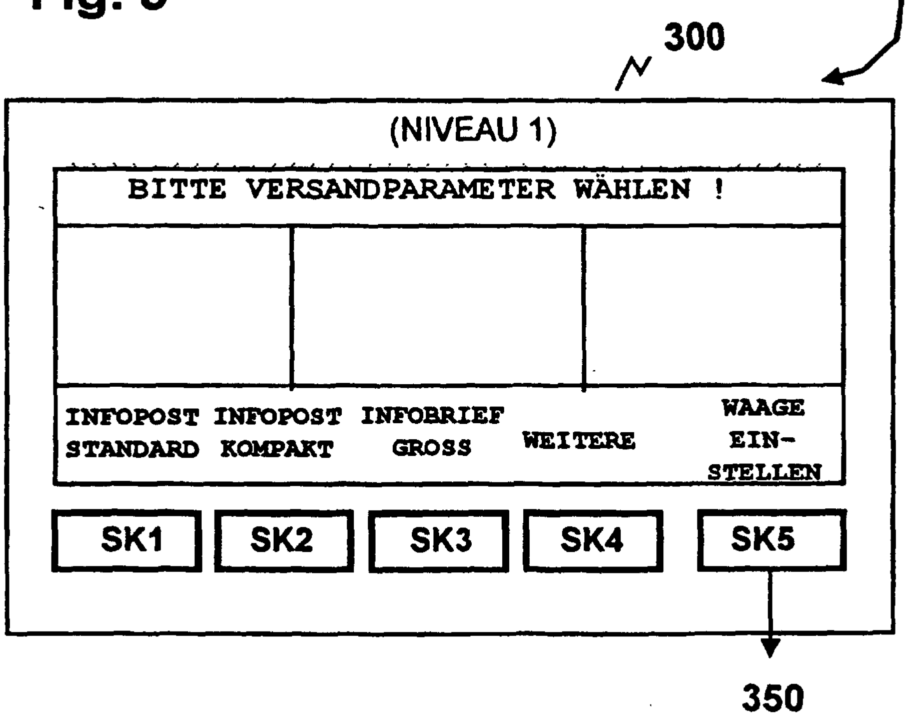
300
(NIVEAU 1)
BITTE VERSANDPARAMETER WÄHLEN !
INFOPOST STANDARD
INFOPOST KOMPAKT
INFOBRIEF GROSS
WEITERE
WAAGE EIN- STELLEN
SK1
SK2
SK3
SK4
SK5
350

Fig. 4

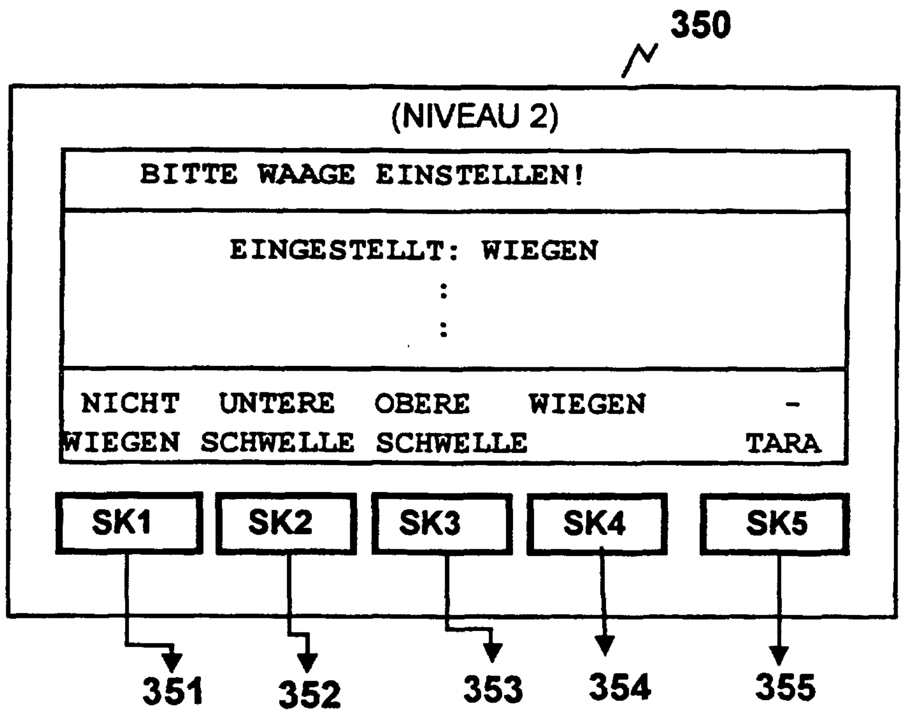
350
(NIVEAU 2)
BITTE WAAGE EINSTELLEN!
EINGESTELLT: WIEGEN
NICHT WIEGEN
UNTERE SCHWELLE
OBERE SCHWELLE
WIEGEN
- TARA
SK1
SK2
SK3
SK4
SK5
351
352
353
354
355

Fig. 5

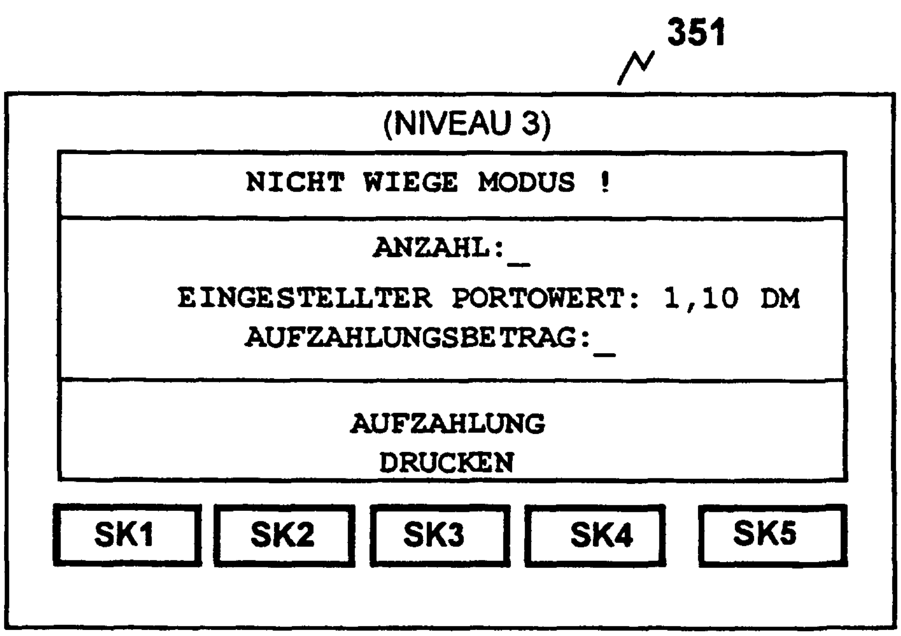
351
(NIVEAU 3)
NICHT WIEGE MODUS !
ANZAHL:_
EINGESTELLTER PORTOWERT: 1,10 DM
AUFZAHLUNGSBETRAG:_
AUFZAHLUNG DRUCKEN
SK1
SK2
SK3
SK4
SK5

Fig. 6

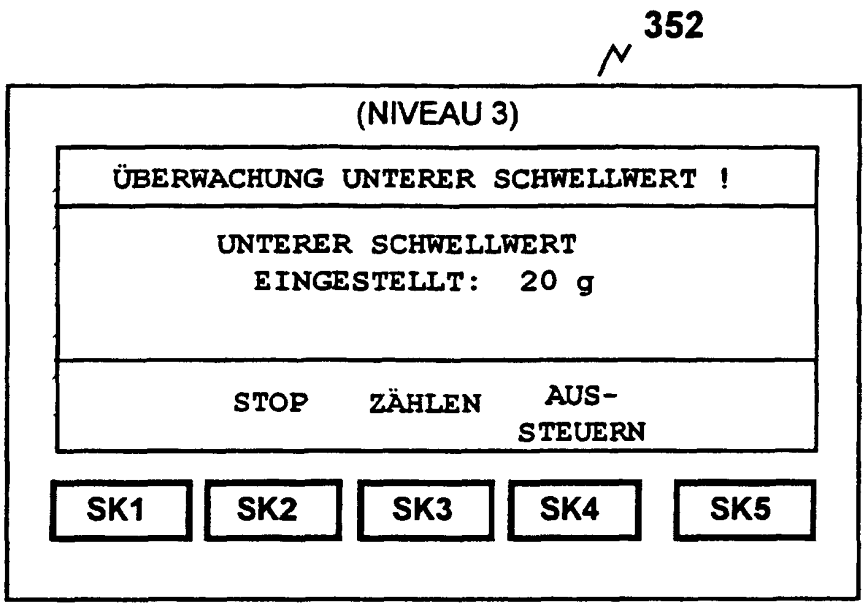
352
(NIVEAU 3)
ÜBERWACHUNG UNTERER SCHWELLWERT !
UNTERER SCHWELLWERT
EINGESTELLT: 20 g
STOP
ZÄHLEN
AUS-
STEUERN
SK1
SK2
SK3
SK4
SK5

Fig. 7

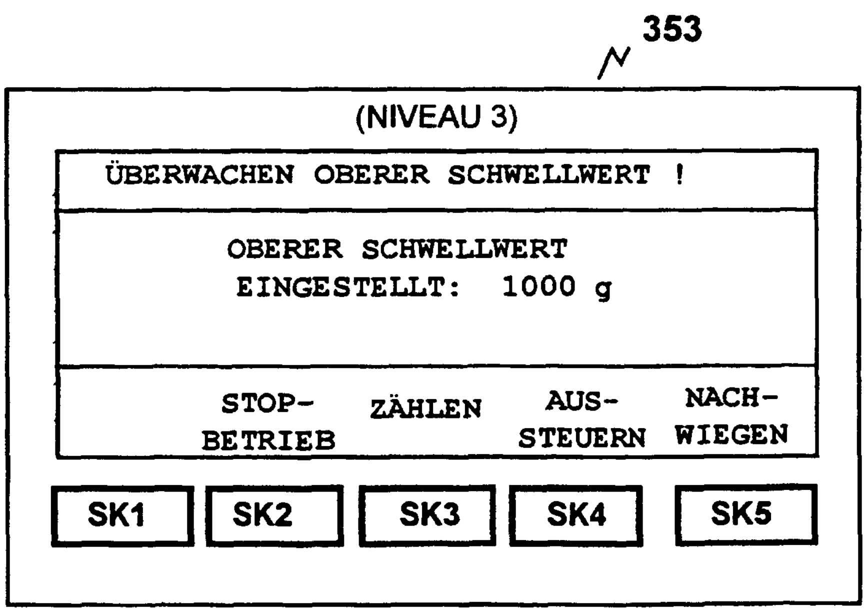
353
(NIVEAU 3)
ÜBERWACHEN OBERER SCHWELLWERT !
OBERER SCHWELLWERT
EINGESTELLT: 1000 g
STOP-
BETRIEB
ZÄHLEN
AUS-
STEUERN
NACH-
WIEGEN
SK1
SK2
SK3
SK4
SK5

Fig. 8

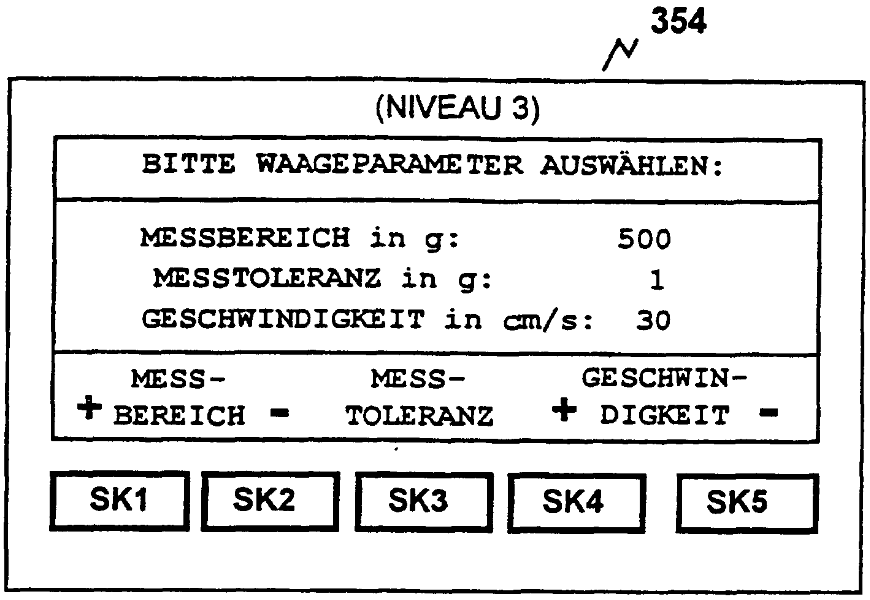
354
(NIVEAU 3)
BITTE WAAGEPARAMETER AUSWÄHLEN:
MESSBEREICH in g: 500
MESSTOLERANZ in g: 1
GESCHWINDIGKEIT in cm/s: 30
MESS-
+ BEREICH -
MESS-
TOLERANZ
GESCHWIN-
+ DIGKEIT -
SK1
SK2
SK3
SK4
SK5

Fig. 9

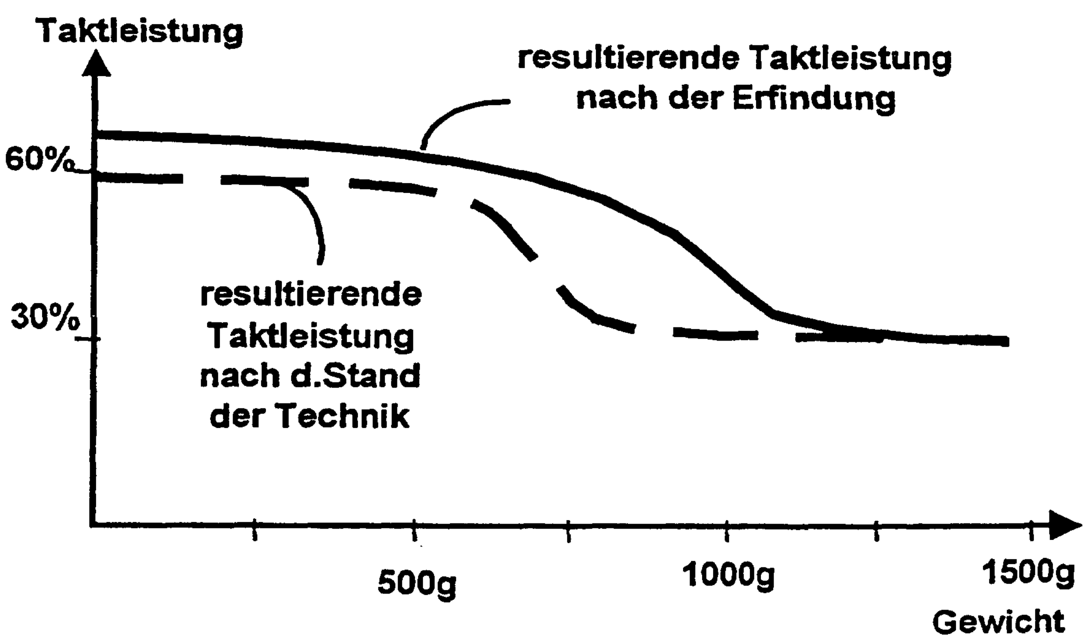
Taktleistung
resultierende Taktleistung nach der Erfindung
60%
30%
resultierende Taktleistung nach d.Stand der Technik
500g
1000g
1500g
Gewicht

Fig. 10